# EUROPEAN PATENT SPECIFICATION

(11) **EP 4 742 592 B1**
(45) Date of publication and mention of the grant of the patent: **16.09.2026**
(21) Application number: 24212499.8
(22) Date of filing: 12.11.2024
(51) Int. Cl.: H04L 9/40, H04L 67/56, H04W 28/02

(54) **SSH METHOD AND PROXY FOR APPLICATION-LEVEL POLICY CONTROL**
SSH-VERFAHREN UND PROXY ZUR RICHTLINIENSTEUERUNG AUF ANWENDUNGSEBENE
PROCÉDÉ SSH ET MANDATAIRE POUR COMMANDE DE POLITIQUE DE NIVEAU APPLICATION

(43) Date of publication of application: 13.05.2026
(73) Proprietor: Cloud Fellows GmbH, 33104 Paderborn (DE)
(72) Inventor: Stecher, Martin, 33104 Paderborn (DE)
(74) Representative: 2K Patent Partnerschaft mbB

(56) References cited:
- CN-A- 110 830 530
- KR-B1- 101 992 976
- US-A1- 2014 122 865
- WIKIPEDIA: "Abstraction (computer science)", 28 July 2024 (2024-07-28), pages 1 - 11, XP093256052, Retrieved from the Internet <URL:https://en.wikipedia.org/w/index.php?title=Abstraction_(computer_science)&oldid=1237248790> [retrieved on 20250304]

## Description

### TECHNICAL FIELD

This disclosure relates in general to the field of information security, and more particularly, to a proxy server and a method for SSH-based application-level protocols under the control of a multi-layer policy engine unit.

### BACKGROUND OF THE INVENTION

The Secure Shell Protocol (SSH) is a cryptographic network protocol for operating network services securely over an unsecured network. It is built across multiple layers defined within IETF originally in RFCs 4250-4256 and several later RFCs and Internet Drafts to extend the original specifications.

As the name indicates, the initial usage of SSH is to provide shell access to a remote computer in a secure way but the original RFCs already define how to leverage the secure network protocol to run various remote commands and subsystems on top of the core SSH protocol. These SSH-enabled applications include SCP and SFTP (defined in Internet Draft draft-ietf-secsh-filexfer) for file transfer, the git command to communicate from a client computer via SSH with a GitHub server working with source code repositories and various other applications.

In most deployments, clients and servers are using an SSH implementation like OpenSSH (often part of the computer's operating system) which launches new SSH child processes per connection. On the client, either the ssh application is called directly by a user or a program or one of the applications (like "scp" or "git") are started on the client that launch ssh as sub-process. On the server side, the ssh process either starts a new terminal session or launches the corresponding server-side application thru a command (like scp or git-upload-pack) or thru a subsystem (like sftp-server). The communication between the SSH process and the SSH application process is then typically via stdin/stdout/stderr pipes or could also be implemented using Unix domain sockets. Image 1 shows the standard implementation stack for SSH applications.

In this context, the term application-level protocol is used to describe the specification of the data format used on top of the SSH core protocol. For example, the SFTP protocol in the draft-ietf-secsh-filexfer Internet Draft series defines a packet format and packet types like SSH_FXP_INIT and these SFTP packets are sent as payload of an SSH_MSG_CHANNEL_DATA message (as defined in RFC 4254). The SFTP protocol and all other protocols specified to run as payload on SSH_MSG_CHANNEL_DATA messages are referred to as "application-level protocols".

SSH connections can be sent via other intermediate computers either by using the intermediate as a jump host (available as an integrated option in most standard SSH programs) or by using the intermediate as an SSH proxy server. SSH proxy server products are often implemented as part of advanced Firewall solutions.

Proxy server solutions acting as a trusted main-in-the-middle for encrypted connections are also known for Web applications using SSL/TLS. The Proxy server establishes separate secure connections between the client and the proxy and between the proxy and server and then decodes, filters and re-encodes the data sent thru the secure proxy connections. These SSL/TLS proxies are used within Secure Web Gateway products for example.

Solutions in the Security Service Edge (SSE) market connect powerful and feature-rich policy engine units for access control and content filtering to secure web gateways, to email intermediates, to cloud application APIs and other policy enforcement points. Access control can be based on any combination of network and connection properties (like server names, IP addresses, port numbers, client and server locations), user properties (user names, group memberships, user location, user scoring and behavior), device posture, functionality and commands being executed or requested) and many more. Content filtering can be based on analysis of the payload data being transferred (such as a transferred file, transferred shell command or response, etc.) and analyzed with available filter engines such as for Anti-Malware or data protection or any generic policy decision such as matching against regular expressions, dictionaries or any other rule-based policy decision). The capabilities of the filter engine benefit from the transaction context built across different layers of the network and data flows. For policy triggers in context of a Secure Web Gateway, one design goal is to start looking at data and provide a verdict as early as possible, another design goal is to handle data in chunks and provide them to the policy engine unit as a stream of data, potentially forwarding parts of the data to the other proxy side and provide the filter engine with a "need more data" decision to interrupt policy execution and to resume when new data arrives. These goals help to lower the latency and provide a better end-user experience. Another goal of an SSE solution would be to unify policy such that a single customer policy definition can be applied to multiple policy enforcement points (for example: a single policy filtering HTTP, HTTPS and FTP data transfers).

SSE solutions not offering a policy enforcement point for SSH communication and SSH based application protocols are exposing a significant lack in a protocol agnostic filtering solution.

SSH Proxy solutions acting on an SSH packet layer are not addressing the requirements and design goals of an SSE filter engine solution. Application-level protocol messages can span multiple SSH data packets and the complete application-level message or even many application-level messages are required before the policy engine unit can provide a verdict. SSH protocol data packets can also contain more than one application-level message or only fragments of an application-level message. Application-level messages are not always only generated by either the original client or server but may also be required to be generated in the proxy in response to a policy-engine verdict (for example in an SCP upload of a full directory in which the policy engine unit blocks one file of the directory, the destination server rejecting another file and all other files allowed by policy engine unit and destination server). Solutions built for policy decisions on an SSH packet level are not addressing these application-level filter engine scenarios.

The core SSH protocols defines messages to control the window size of both SSH piers and data messages must adhere to the current window size and window sizes need to be adjusted to allow for additional messages to be sent. SSH Proxy solutions that do not maintain their own window size management to the downstream and upstream side but rely on simply proxying window size update packets between client and server do not address the requirement of a filter engine to potentially wait for much more data to analyze before allowing to forward some data to the other side. Therefore, existing solutions either cannot wait for a filter service to delay their verdict until closer to the end of large file transfer via SSH (like SFTP and SCP) or the solutions cause a stalling connection when they attempt to suspend a session for a larger file transfer. Alternatively, existing solutions are performing a separate download/upload of files in a different connection but are then only able to execute policy at the end of the complete file but cannot execute a policy on a data stream chunk-by-chunk causing a user-experience that is worse than required by a policy that detects at an earlier data chunk that the file transfer can be allowed.

The SSH core protocol allows for multiple channels to be opened in parallel although often only one channel per connection is used for an application protocol data transfer. Some application-level protocols (such as SFTP) allow for asynchronous, parallel file uploads or downloads within its one channel. SSH Proxy solutions not providing a form of multiplexing for parallel policy execution, limit the ability to combine those application-level protocol capabilities with unified policies; those solutions are therefore unable to suspend the data transfer for one file while other files can continue to flow.

SFTP as an application-level protocol over SSH can split data upload over multiple write messages (SSH_FXP_WRITE) and await confirmation from server (via SSH_FXP_STATUS messages). Existing solutions not implementing separate application-level protocol stacks on the two proxy sides are unable to suspend the flow for larger files to await a policy verdict without stalling the connection.

Leveraging the ICAP protocol (as specified in RFC 3507) is one option to connect a proxy server (ICAP client) thru a callout protocol with a filter server (ICAP server). The ICAP protocol is only defined for HTTP traffic. A proxy server (ICAP client) that intends to use the ICAP protocol for other network protocols but with a generic ICAP server solution requires functionality to rewrite the protocol to look like an HTTP transaction. ICAP also only provides two control points (at the end of the preview message and at the end of the application message) which conflicts with SSH Proxy solutions acting only on SSH packets and/or not implementing separate window size control. For larger file transfers those known solutions are causing stalled connections while preparing the request to the ICAP server.

In HTTPS connections, the SSL/TLS protocols require server-side authentication and allow for client-side authentication (via client-certificate) although the vast majority of HTTPS connections does not use client certificates. The SSH protocol also requires server-side authorization while establishing a secure connection and then runs an additional user authentication message exchange on that connection providing options for password authorization and for public/private key pair authentication. Public key authentication is preferred or required by many SSH servers; SSH Proxy solutions relying on password authentication are lowering the security standard of SSH connections.

SSH Proxy servers can be deployed in forward proxy mode and/or reverse proxy mode. In reverse proxy mode, the proxy server frontends one or more well-known SSH servers and often maintain a trust relationship to those SSH servers, potentially also hosting the official server authentication key so that connecting clients may not be able to distinguish whether they are connecting to the SSH Proxy or the final server. The SSH Proxy in reverse proxy mode will authenticate the users on behalf of the final server and may not need to use user-specific client certificates but use its own client certificates in the secure connection between proxy and server. An SSH Proxy in forward proxy mode has a trust relationship with the client side and clients enable the proxy to behave as a trusted man-in-the-middle. The forward SSH proxy can communicate with arbitrary external SSH servers and on that upstream proxy side it will need to authenticate to the server on behalf of the client.

Due to the secure way the SSH protocol validates the ownership of the public/private key, the proxy cannot simply forward the user authentication messages from the client to the server but needs a way to calculate the specific security response to the server's key challenge with the private key. For this, various solutions have been developed to escrow keys with an SSH proxy or to leverage a network-based PKI or HSM solution. The SSH protocol family has provided specifications for an SSH-Agent communication via a separate channel of the connection enabling a trusted jump host to ask the client to calculate responses to the security challenges by signing information on behalf of the jump host but without exposing the private key directly.

Beside the official jump host specification, SSH clients have limited options to address a proxy server as an intermediate for the final server. SSH Proxy solutions not providing different options to be addressed by SSH applications may require the deployment in context of a firewall or other network device thru which traffic is routed automatically and which may not be suitable for an SSE-style deployment where proxy servers are deployed as separate components in the network or in the cloud. KR101992976B1 relates to an SSH protocol-based server remote access system for securely managing an SSH authentication key, which securely manages an SSH authentication key in an access control gateway, wherein, upon request for authorized access, the access control gateway performs SSH authentication key authentication and relays the connection. The SSH protocol-based server remote access system for securely managing an SSH authentication key comprises: an authentication authority policy unit for setting information on an accessible server in advance, storing the same as authorized access information, registering an SSH authentication key of each user first, and storing the same in an SSH authentication key storage; a client proxy handler for receiving a message from an access control client, forming a session with the access control client (hereinafter referred to as a client session), and relaying the message; an SSH client handler for forming a session corresponding to the client session (hereinafter referred to as a server session) with the server; an SSH key manager for updating the SSH authentication key of each user and storing the updated SSH authentication key in the SSH authentication key storage; and a policy checking unit for relaying a message between the client session and the server session, and authenticating the server session by using the SSH authentication key stored in the SSH authentication key storage when a negotiation message for forming an SSH session is transmitted and received. According to the system as described above, the SSH authentication key is securely managed in the access control gateway and the SSH authentication key is automatically authenticated during the server access, thereby preventing the SSH authentication key from being leaked to the outside and improving user convenience.
US2014122865A1 is directed towards systems and methods for split proxying Secure Socket Layer (SSL) communications via intermediaries deployed between a client and a server. The method includes establishing, by a server-side intermediary, a SSL session with a server. A client-side intermediary may establish a second SSL session with a client using SSL configuration information received from the server-side intermediary. Both intermediaries may communicate via a third SSL session. The server-side intermediary may decrypt data received from the server using the first SSL session's session key. The server-side intermediary may transmit to the client-side intermediary, via the third SSL session, data encrypted using the third SSL session's session key. The client-side intermediary may decrypt the encrypted data using the third SSL session's session key. The client-side intermediary may transmit to the client the data encrypted using the second SSL session's session key.

Companies are deploying proxy servers for security and compliance reasons. One aspect of proxy implementations in general is to have an independent protocol implementation that can mitigate implementation vulnerabilities of original clients and servers. The SSH protocol family continues to involve as security challenges and protocol weaknesses are detected. SSH proxy solutions that use the same source code base as normal clients and/or server implementations will be limited in their capabilities to mitigate vulnerabilities found in those implementations. SSH proxy solutions not addressing latest security extensions of the protocol are causing a risk if they prevent new security features from being negotiated in the initial key exchange process.

Proxy solutions may need to scale to a very large number of parallel connections and sessions. SSH Proxy solutions built on the traditional multi-process architecture (one or more processes per application-level SSH connection) can be limited by system resources such as the number of available processes, number of available pipes and/or run into system scalability issues. Sharing transaction context across processes is challenging. They also require a separate track record if they want to provide policy decisions across parallel connections (for example to rate-limit the data amount that a single user may consume across multiple parallel SSH connections).

### BRIEF SUMMARY OF THE INVENTION

The invention focuses on providing a proxy server solution for SSH connections, further called SSH Proxy solution, on a true application-protocol level specifically in combination with a rule engine that qualifies for integration into a multi-enforcement-point Security Service Edge (SSE) solution but is not limited to the specific embodiments of that design focus. In fact, many of the aspects and elements of this invention can also be leveraged in other SSH Proxy solution types. The invention is set out in the independent claims. Advantageous embodiments are defined in the dependent claims.

The invention discloses a method comprising the steps of:
processing incoming SSH connections in a Downstream Proxy unit;
involving a Policy Engine unit to control user access and access to the SSH server;
opening an outgoing SSH connection from an Upstream Proxy unit to the SSH server;
transferring SSH channel data between the SSH client, Downstream Proxy unit, Policy Engine unit, Upstream Proxy unit and SSH server in both directions;
allowing the Policy Engine unit to filter the transferred data with definable policy control whether chunks of data can already be forwarded while more data is still being received or whether more data needs to be received before deciding on data forwarding, and
controlling window sizes of the SSH protocol between the SSH client and the Downstream Proxy unit and/or between the Upstream Proxy unit and the SSH server independently from each other and autonomously sending window size adjust messages, allowing to receive and to provide more data to the Policy Engine unit without stalling the connection, hereby enabling the Policy Engine unit to make decisions to forward, hold or block any amount of data based on the definable policy control, wherein the window size defines the amount of SSH channel data exchanged before receiving and/or sending a window size adjustment message.

In a preferred embodiment, this window size adjust messages can be sent without waiting for those messages from the other side.

A central unit of the SSH Proxy solution is the Policy Engine unit that shall give the administrator the freedom to run even the most complex content filtering decisions. In such a scenario the proxy has to balance the desire to provide quick feedback from the SSH server back to the client with the need of the policy engine to request additional data before it is able to make a proper decision. Forwarding all data immediately between the Downstream Proxy unit and the Upstream Proxy Unit has the risk to forward data that the Policy Engine may decide later to block and thus already forwarding malicious or confidential data that the solution is supposed to stop and first uploading/downloading complete data to the proxy level and then forward everything after a single Policy Engine run at the end of the data would have the disadvantage of strange user experience such as a long delay to see a first reaction when downloading a large file or missing the early feedback of a server that the upload will fail due to exceeded file volume quota or other server errors not showing up early enough with the user. Therefore, the solution is able to forward data as soon as possible, providing minimal latency in the actual end-to-end communication between the client and the server whenever the policy allows that immediate forward but it is also able to collect and hold data for the Policy Engine unit if the policy needs to see a lot more data before making a decision. In that situation, the SSH protocol introduces the problem of exceeding window sizes as defined in section 5 of RFC 4254. At the time a channel is opened, the SSH client and server communicate the size of their receive windows and the other pier can only send channel data until that window size has been fully consumed and then needs to wait for a window adjust message. But if more data than the current window size needs to be collected for the Policy Engine unit, the communication would stall if the SSH proxy would only forward packets that it receives from one pier to the other pier. This invention introduces an injection of window size adjust messages that are sent by the Downstream Proxy unit to the SSH client and/or by the Upstream Proxy unit to the SSH server without waiting for such a message to be provided by the other side which decouples the downstream and the upstream side of the proxy as long as necessary to hold more data for the Policy Engine unit and then re-couples the downstream and the upstream side for immediate delivery of data as soon as the policy has cleared the data to be forwarded.

In a possible embodiment the transferred SSH data is interpreted on an application protocol level, preferably SCP, SFTP or Git, and where the Downstream Proxy unit exchanges application protocol level control messages with the SSH client and/or the Upstream Proxy unit exchanges application protocol level control messages with the SSH server, both autonomously and independently from messages from the other side. Preferably a direct SSH_FXP_STATUS message in response to an SSH_FXP_WRITE message from the SSH client is exchanged, in order to avoid the problem of stalling connections on an application protocol level while waiting for a policy decision before data can be forwarded.
The SSH protocol is used to exchange data of several higher-level application protocols on top of the SSH channel data. Important examples are the SCP protocol to upload and download files, the newer SFTP protocol to also upload and download files or the Git protocol for a client to communicate with a GitHub server to pull and push data from and to source code repositories.
The above mentioned problem that exceeding SSH window sizes would not allow to hold arbitrary amounts of data at a Policy Engine unit, repeats itself on some of the higher-level application protocols: In the SFTP protocol an upload of larger files is done via multiple SFTP application messages of the type SSH_FXP_WRITE. If data is held for the Policy Engine unit and not yet forwarded to the SSH server, then there is no SSH_FXP_STATUS message yet that the SSH server replies but without such a message, the SSH client would stop sending more data while too many of the outstanding SSH_FXP_WRITE messages are unacknowledged. This invention puts application-level protocol support into the Downstream Proxy unit and into the Upstream Proxy unit and introduces the method to autonomously handle the control messages needed to decouple both sides so that additional data can be received and held for the Policy Engine unit before re-coupling the sides after a policy decision has been taken. For SFTP uploads, these control messages include the processing of SSH_FXP_WRITE and SSH_FXP_STATUS in the proxy units and for SFTP downloads, these control message are SSH_FXP_READ, SSH_FXP_DATA and SSH_FXP_STATUS as defined in the "draft-ietf-secsh-filexfer" protocol description.

*I*n a possible embodiment the Policy Engine unit is responsible for and makes one or more different decisions during an SSH connection:
- for decisions whether a user of the SSH client application is allowed to connect to the SSH server,
- for decisions on whether to allow a channel request of a specific type and/or command preferably an SCP upload and/or download, an SFTP session, a shell session and/or a Git repository clone
- for decisions on allowing, blocking or modifying data exchanged on such a channel, preferably an SFTP upload and/or download, by analyzing the channel data as a stream of data chunks including the option to hold data as long as needed before a decision is made.

The Policy Engine unit becomes more powerful if it controls a large amount of the aspects of an SSH connection. Instead of having a central configuration that implements access control and another configuration which applications shall be supported and separate filter engines for Antimalware and Data Protection, this invention provides a fully flexible policy engine to any of the decisions that are needed during the SSH connection and that way replacing more static configurations with a flexible policy concept for each SSH connection. One embodiment of the SSH Proxy uses a Python policy engine giving the policy administrator the full flexibility of a Python script to be executed as policy, including any calculation or even remote server communication during the execution of the policy. The policy engine is called multiple times with different policy triggers during each SSH connection: A first trigger is reached when a user connects with an SSH client to the SSH Proxy solution. The policy engine can now determine whether the user shall be allowed to connect to the requested server and it can also use the policy to change any of the upstream information, for example replace the requested target server address with a different address. The next policy transaction will be triggered when a data channel is opened on a SSH connection; the policy can decide in a most flexible way whether the channel of this specific type is allowed to be opened and how the SSH Proxy shall interact with that channel. Depending on the channel type, the policy already knows the specific action taking place, for example for SCP, this policy trigger point has the information which file is requested to be uploaded or downloaded to/from the server. The policy can decide whether it wants to apply the SCP protocol interpreter in the downstream proxy and upstream proxy and handle subsequent policy calls on the actual file data transferred, or whether it allows the data to be exchanged on an SSH packet level without SCP parsing, or whether it wants to block the upload/download without looking at the data. Similar logic applies to all the other application-level protocols although less information might be available at this trigger point, for example for SFTP the details of the file name are not yet known at this trigger point but the decision whether to proxy data on an SFTP protocol level or on an SSH packet level or to not allow SFTP with this server for this user at all, remains. The policy is then called a third time when the first chunk of data arrives and the policy can look at the data, either on the application-protocol level or on the SSH packet level as decided previously. The policy can allow to forward the chunk of data immediately for minimum latency between the client and the server, or it can advise to hold the data and request any amount of additional data to be received first before making a decision. Depending on this, the policy engine may be called many more times but at least one more time at the end of the data to make the final decision whether to allow the data as is, whether to block the data or whether to rewrite parts of the data and forward modified data. Each call to the Policy Engine unit is causing a policy run, also named a Policy Transaction. The input parameters for a Policy Transaction and all surrounding information is called a Policy Context and stored as key-value pairs within a Context Object for the Policy Transaction.

In a possible embodiment, the Policy Engine unit maintains Connection Context, Transaction Context and/or Meta Connection Context information across the SSH connection and for multiple parallel and/or historic SSH connections, allowing the definable policy to continuously interact with that information for policy decisions, hereby allowing to refer to context and intermediate results determined at previous policy transactions.
The above-mentioned multiple Policy Transactions of the Policy Engine during the SSH connection become more powerful if each Policy Transactions has access to all the key-value pairs of all the Policy Context objects that were made available to the previous Policy Transactions of the SSH connection. For example, during the first transaction when the user connects to the SSH Proxy solution properties like the user name, the source IP of the client, the destination server and the public key used by the user to authenticate at the SSH Proxy are all available and mostly useful for this first policy decision. Not all of those properties are typical also for the second policy trigger when a data channel is requested, for example, most customer policies may not require to see the public key of the user again when making the policy decision on the data channel but in some cases, this might be a valuable additional property. Therefore, this SSH Proxy solution creates a Connection Context for the Downstream Proxy unit and for the Upstream Proxy Unit and keeps those contexts available during the whole SSH Connection and provides them to each of the policy triggers. Even more useful is that for intermediate results calculated in one policy run and stored in the policy context, for example, if the policy looks up the username in a remote user directory to determine the user groups that the user is member of. By having the policy storing the list of groups in the Policy Context object, the information can be used in subsequent policy transactions, for example, to allow SFTP only for members of the IT group, without the need to query the user groups once again.
As an additional level, some of the key-value pairs are collected during an SSH connection within a Meta Connection Context, for example the number of SSH connections that a user has had in a certain time and how much data the user has transferred; such meta information is very powerful for subsequent policy transactions for example to implement a quota for users or to throttle the overall bandwidth that a user is allowed to consume.

In a possible embodiment the Downstream Proxy unit and the Upstream Proxy unit are implemented as application-level proxy tasks and/or the Policy Engine unit is implemented as a Policy Engine task, all with independent task scheduling and incoming message queues and where the tasks are linked to each other with a dual-linked chain of tasks, enabling an asynchronous execution of the tasks.
The different units within the SSH Proxy have to communicate with each other. In one embodiment those can be implemented as separate processes in another embodiment those can be implemented as multiple threads. Those options have the disadvantages when scaling the solution to a very high number of SSH connections supported in parallel because they consume limited system resources; even more, the implementation done via multiple processes complicates the exchange of meta data such as the Policy Contexts and the collection of meta context data across multiple connections. The preferred embodiment of this SSH Proxy solution chooses to implement each of the instances of the units as a method, called a Task that can be executed for example by a pool of working threads and each Task can be scheduled, interrupted and resumed at any time and executed asynchronously while running but interrupting if the task needs additional input data to resume its execution. Therefore, each Task has an input queue for incoming data messages, works on those messages, potentially forwards this or newly generated messages to another task and interrupts and waiting for more data when the input queue becomes empty. The Tasks forming the set of units required for a given SSH session are linked to a chain of Task and the chain is actually dual-linked so that messages can flow upstream, starting from the Downstream Proxy unit or downstream starting from the Upstream Proxy unit.

In a possible embodiment
one Application-level Proxy task embodiment is parsing and generating messages of the SFTP protocol; and/or
one Application-level Proxy task embodiment is parsing and generating messages of the SCP protocol; and/or
one Application-level Proxy task embodiment is parsing and generating messages of the Git protocol, and/or
additional Application-level Proxy tasks to be added for other SSH application-level protocols.

If the policy has requested to handle the data on an SSH channel on the higher-level application-level protocol, then the corresponding Application-level Proxy task is initiated and inserted into the task chain. When data on the SSH channel is received, this creates an initial raw data message provided to the Application-level Proxy task, the Application-level Proxy tasks parses the raw data until it has parsed an instruction of the higher-level protocol, for example, the SFTP Proxy task can parse SFTP protocol instructions such as the above mentioned SSH_FXP_WRITE instruction and then forms a corresponding SFTP file data message to be forwarded to the next task in the chain.

In a possible embodiment the Application-level Proxy task on the Downstream Proxy unit side of the task chain is forming a virtual shell emulating the server responses to keyboard input of the user, and the Application-level Proxy task at the Upstream Proxy unit side is forming a virtual terminal client emulating the keyboard input of the user, together allowing to map commands and responses of an SSH shell session into higher-level abstracted messages for the Policy Engine unit.

Most of the application-level protocols, such as SCP, SFTP and Git have a specific protocol structure that can be parsed and result in well-defined messages. For normal SSH shell sessions, in which a user connects to the terminal shell of an SSH server, the SSH protocol provides no further structure; the data transferred is only a sequence of keys and control characters generated from keyboard input and the replies are visible characters and control characters to echo the input and to provide the output of the commands executed on the server. In order to properly parse the commands executed by the user and to distinguish between the echo of user input and actual server output, the SSH Proxy solution implements a virtual shell in the Download Proxy unit that interacts with the user and provides the echoes to the commands and can then extract the actual command that the user typed and forward that as a structured message upstream in the task chain, while the Upstream Proxy unit implements a virtual terminal client that translates the command messages into key strokes to be sent to the SSH server and parses the replies from the server, distinguishes between the server echo to the input and the actual server replies which are then also formed into structured messages to be sent downstream in the task chain.

In a possible embodiment the Application-level messages of the SSH application protocol are abstracted into higher-level messages that are protocol-agnostic to unify similar functionality of different application-level protocols for the Policy Engine unit, allowing policy to execute a single policy routine for multiple SSH applications, preferably s a single routine for file transfers via SCP, SFTP or Git.

The SCP protocol and the SFTP protocol can both be used as application-level protocols on top of the SSH protocol to download and upload files and directories from and to the server. The application-level messages parsed in the specific protocol are different. Forwarding the native application-level messages in the task chain would require an SCP-specific and an SFTP-specific policy that can act on those application messages. However, the functionality of both is similar. Therefore, the SSH Proxy solution transforms the application-protocol specific messages into abstracted higher-level messages, for example a message that describes the beginning of a file upload or download and a message that describes a part of the file content. Those abstracted messages can then be used by the Policy Engine to drive a single, unified policy that controls how to deal with the upload and download for both SCP and SFTP. Similarly, cloning a repository from a GitHub server to a local client via the Git application-level protocol on top of the SSH protocol, can be interpreted as a download of a directory structure of files and the same abstracted higher-level messages are also applied here to leverage the unified policy of the customer's administrator even for this file type. Additional messages for the task chain and the Policy Engine unit can be sent in addition which only apply to a specific application-level protocol, for example, an extension of the SFTP protocol supports to copy a file and such a parsed message forwarded in the task chain is then SFTP-specific and does not apply to other protocols.

In a possible embodiment an additional Policy Multiplexer task in the task chain controls multiple Policy Engine unit transactions in parallel in order to support multiplexing application-level protocols such as the parallel transfer of multiple files via SFTP and thereby decoupling the pausing and/or resuming of the parallel data transfers.

The download and the upload of a directory of files already includes multiple files and each file is provided to the Policy Engine unit for a decision how to hold, allow, block or modify the file. For a protocol like SCP, all the files are transferred sequentially so that no special method is required other than restarting new policy transactions for the new files. But for a protocol like SFTP, the copying of multiple files can be done in parallel: a first chunk of data can be sent for the first file, a second chunk of data can then be the beginning of a second file and the third chunk of data can then be the second part of the first file. In the abstracted file-start and file-content messages for the policy engine, holding data for the first file can cause conflicts and delays for the other files transferred in parallel if the policy engine only works sequentially. The SSH Proxy solution adds an additional task in the task chain that multiplexes the policy flow in a way to handle multiple, active parallel policy flows for each of the open files that are transferred in parallel in order to maintain the freedom of the policy engine to hold an arbitrary amount of data for one file prior to making a policy decision while the data for another file can be forwarded immediately and without delay in parallel.

In a possible embodiment the Policy Engine unit modifies data in the Transaction Context resulting in altered data content in the SSH application-level protocol to support modification of the commands, responses and files exchanged between SSH client and SSH server thru the SSH Proxy.

The policy content for the file content messages triggering the Policy Engine unit includes the data that has been received plus the previous data that is still on hold and that was not yet forwarded thru the task chain to the other pier. Beside allowing or blocking the file transfer, the policy engine has the additional option to modify the content of that buffer, effectively exchanging the data that is transferred. For a file transfer this implies that the transferred file can be changed, for example, when an external user is allowed to download an internal document, a specific policy can modify the document to include a watermark and copyright statement into the document while flowing thru the filtering SSH Proxy solution. The same concept applies when the SSH transaction is not a file upload or download but a shell session on which multiple commands are sent to the SSH server and responses are sent back to the SSH client. The policy can act on any of the command, allow it, block it or modify it by replacing a shortcut command by a real command that the server understands and it can check the response from the server and remove confidential data that shall not be shared with the user for example.

In a possible embodiment the Policy Engine unit generates block events, resulting in block messages flowing in the opposite direction thru the dual-linked task chain and error messages generated in the application-level protocol in order to provide end users with proper error messages and to support blocking of only some files while allowing other files in the data transfer of a set of files, preferably such as the download and/or upload of a directory.

If the policy decides to block a file transaction, for example a file upload, then the file upload to the server is not only interrupted but an error message, generated by the policy, shall be provided to the user for proper use feedback. Such a message does not originate from the Upstream Server unit but is generated in the Policy Engine unit and sent downstream in the task chain to the Downstream Proxy unit. Depending on the application-level protocol used, the abstracted block message is translated in the proper format of the application-protocol, for example SFTP and ideally done in a way to provide the block message for the single file but allowing the client to upload additional files that are part of a directory upload.

In a possible embodiment the hostname for the SSH server is determined by the Policy Engine unit from information made available thru the Connection Context by mapping that information to a list of hostnames, or by programmatically calculating the hostname from information encoded into the username.

The SSH protocol itself does not know the concept of an application-level proxy server, therefore providing the challenge that a user needs to address the proxy server and the proxy server needs to know where to connect for the final SSH server. In one embodiment, the user can be given multiple options to address an SSH Proxy on its way to the final SSH server. If the SSH Proxy solution is deployed in a reverse-proxy style deployment in front of a single SSH server for example or if, in a forward-proxy style deployment, the username already provides sufficient information to connect to a specific server, for example the user "git" indicates to connect to the company's GitHub server, then the policy may already choose from a simple mapping what the destination server shall be. That supports the client a very convenient support of only typing "ssh git@proxy.example.org", directly reaching the proxy server which then, controlled by policy, will connect upstream to the "github.example.org" as the final server although the user has not indicated that anywhere. In another option, the final server name can be provided by the user by encoding it into its username, for example by sending "ssh git@myserver.example.org@proxy.example.org" or other strings with different delimiters known and understood by the SSH Proxy solution, the proxy server can be addressed and the final server name that the user wishes to connect to can be programmatically determined from the user name.

In a possible embodiment wherein the hostname for the SSH server is retrieved after the SSH client connects to the Downstream Proxy unit as being a jump host and exposing the SSH server name to the jump host;
the Downstream Proxy unit retaining the SSH server host name in the Connection Context of the Policy Engine unit;
the Downstream Proxy connecting to a second Virtual Downstream Proxy unit;
the Virtual Downstream Proxy unit connecting to the same Policy Engine unit and to the Upstream Proxy unit, and
the Upstream Proxy unit connecting to the SSH server available in the Connection Context.

The concept in the SSH protocol that comes the closest to a proxy server is the so-called jump host. The jump host can be defined as an additional option next to the final server name. The benefit for the jump host is that it receives the name of the final server within the SSH protocol but the limitation is that a normal jump host is only supposed to open a TCP connection to the final server which is then used to open an end-to-end encrypted connection from the client to the server via the jump host which does not allow a jump host to implement a content-filter or even application-level proxy. This invention solves this challenge by accepting the jump host configuration as one option to address the proxy, the proxy behaving as a jump host, then connecting to a second Downstream Proxy unit internally, without actually starting another TCP connection and connecting both Downstream Proxy units to the same Policy Engine with the same Connection Context object so that the second Downstream Proxy unit can now negotiate a second encoded connection with the same client, embedded in the first connection but by having access to the original Connection context of the first connection, it has the information of the final SSH server available and can use that to start the proper Upstream proxy connection to that server.

In a possible Embodiment the Upstream Proxy unit authenticates the user for the upstream connection with public key encryption by
using public/private key pairs provided by the Policy Engine unit from local storage or retrieved remotely, or by
opening an SSH Agent channel to the SSH client, requesting a list of available public keys from the client, selecting the keys to be used in upstream authentication by the Policy Engine unit and asking the SSH client through the SSH Agent channel to sign the response for the user authentication challenge.

In case of a reverse-proxy style deployment in front of a single server, the usage of a single private key for the SSH proxy solution can be sufficient to authenticate against the final server; more complex scenarios for many users in a forward-proxy style connecting to many SSH servers requires to use per-user specific private key authentication which could be retrieved remotely by the policy engine given the flexibility of the policy engine implementation. Another option that the SSH Proxy solution provides is to leverage the defined SSH agent protocol, opening a channel for the agent communication from the Downstream Proxy unit to the client and retrieving a list of public keys from the client, checking the Policy Engine unit and customer policy which of those public keys shall be tried with the SSH server. For each public key that the SSH server is willing to proceed with, the information flows back from the Upstream Proxy to the Downstream Proxy unit which is then using the agent channel to request the SSH client to sign the authentication message that the Upstream Proxy needs and the signed message is then sent from the Upstream proxy to the SSH server. This method allows to keep the private key only on the SSH client without sharing the private key with the SSH Proxy or any other solution but only signing the specific message. This way, the SSH Proxy can support an arbitrary list of users with an arbitrary combination of private keys without requiring any form of PKI solution or other complex key sharing techniques.

In a possible embodiment the Policy engine unit executes the definable policy by one or more of the following:
running a Python interpreter to execute a customer policy written in Python;
interconnecting to a 3rd-party policy engine;
implementing an ICAP client and translating triggered policy transactions to pseudo HTTP-transactions to interact with generic ICAP servers;
implementing an OCP client in combination with an OCP scheme for SSH and translating triggered policy transactions to match that OCP scheme, or
implementing a HTTP(S)-REST client and translating triggered policy transactions to REST calls to interact with generic REST APIs.

The implementation of the Policy Engine to interpret a Python script as the customer policy, proves the explicit freedom and flexibility that is given to the policy administrator. The complexity of such a Python script cannot be pre-determined. In one example, the policy administrator can add Python modules to interact with remote server and the policy task may wait some time for a server response; during such a time, the other tasks, specifically the Download Proxy unit and the Upstream Proxy unit shall continue to process messages from the SSH client and SSH server in order to avoid latency and timeouts.

By integrating the SSH Proxy solution into other Security Service Edge (SSE) market solutions, the policy engine and policy format of those hosting solutions shall be supported for a unified user experience; some of those those 3^{rd}-party policy engines require the concept of interrupt handling while waiting for external events such as network input/output.

The ICAP protocol as defined in RFC 3507 is only defined for Web (HTTP) traffic; by supporting arbitrary ICAP servers as the policy engine, the Policy Engine first has to transform the data of the messages sent thru the task chain into a virtual HTTP data transfer. In addition, the ICAP protocol supports the concept of a "preview" of data of a size given by the server; the Policy Engine unit must hold and collect data first until the preview size is reached and after the preview response hold and collect all additional data until the end of the data transfer in order to send the remaining ICAP message.

The OCP core protocol is defined in RFC 4307 and can be seen as a successor of the ICAP protocol, it is able to support adaption to specific protocols, including an adaption specifically for SSH and its application-level protocols.

In another embodiment the Policy Engine can implement a generic REST client that sends REST requests to generic REST servers via TCP/IP and HTTP(S), providing the trigger point via the REST URI and the Policy Context objects within the REST request body, allowing a remote REST server to execute the policy and to provide an asynchronous network response back to the Policy Engine; the Policy Engine unit must handle the protocol translations as well as the interrupt and timeout handling while waiting for the REST server to process the requests.

A further part of the invention is a computer device comprising a central processing unit, network interfaces and a memory, wherein in the memory a program is stored and executed to implement a method according the method claims 1 to 14. A standard server implementing the method is possible.

An aspect of this invention is to provide an application-level proxy support on top of the packet layer of SSH data messages.

An aspect of this invention is to maintain separate and independent sessions and channels on the downstream and upstream side of the proxy with independent window management, fully decoupling client side, server side and policy engine unit. This allows to suspend the data sink side of the proxy (that is the downstream side for a file upload or the upstream side for a file download) while receiving of the data can continue on the data source side (the other proxy side) even for large files and solve the window problem of existing solutions.

An aspect of this invention is to drive feature-rich policy engine units, for example from an SSE solution. One embodiment provides a generic rule engine in the form of an arbitrary Python program to filter the data.

An aspect of this invention is to manage the requirements of SSH and the application protocol with the desire of a policy engine unit to filter in chunks and to provide "need more data" interrupting and resuming workflows.

An aspect of this invention is to provide application-level proxy support for SCP.

An aspect of this invention is to provide application-level proxy support for SFTP.

An aspect of this invention is to provide application-level proxy support for Git.

An aspect of this invention is to provide application-level proxy support for shell access by maintaining a virtual shell at the proxy and fully decouple client and server terminal sessions.

An aspect of this invention is to provide an extension capability to plug in additional application-level proxies.

An aspect of this invention is to generalize the characteristics of application-level protocols (for example to provide a unified policy engine unit experience for both SCP and SFTP data transfer).

An aspect of this invention is to multiplex asynchronous, parallel policy transactions during SSH application communication (for example the parallel transfer of files within an SFTP upload or download).

An aspect of this invention is to trigger the policy engine unit on various layers of the SSH protocol and the application-level protocol (connection establishment, user authentication, channel opening, application messages) and to maintain transaction context to provide context of earlier policy triggers).

An aspect of this invention is to rewrite SSH application policy data to become compatible with web-specific filtering solutions (such as ICAP) and to provide SSH application specific schemes or profiles to more generic filtering solutions (such as OCP as defined in RFC 4037).

An aspect of this invention is to allow for the policy engine unit to decide whether a connection shall be proxies on the application-level or be proxies on a generic data proxy level or on a transparent packet level. While downgrading the proxy would disable some policy capabilities, a transparent packet level might be helpful to work around broken client/server implementations that do not interact with the protocol implementation of the proxy. The data proxy level would still decouple packets on client and server with separate window management and enable the policy engine unit to run a generic content filtering program while missing some application-level-specific properties but still allow to support broken or unknown application-level protocols on a proxy.

An aspect of this invention is to support an implementation in a single multi-connection process including application-level proxies and filter engine that can optimize the resource requirements of many parallel SSH connections (for example by using a worker thread model) and by lowering latency due to less process execution overhead and by allowing for a higher-level of security and confidentiality because decrypted traffic does not need to be sent across process boundaries.

An aspect of this invention is to provide an independent implementation of the SSH and application-level protocols, supporting leading-edge security capabilities, allowing to mitigate vulnerabilities in deployed client and server implementations of SSH and the application-level protocols.

An aspect of this invention is to support forward-proxy and reverse-proxy modes.

An aspect of this invention is to address the proxy server in various ways including the ability to address the proxy server like the final server and to encode the destination server into the username.

An aspect of this invention is to implement a virtual downstream proxy connected to a jump host implementation within the proxy so that the proxy can be configured as a normal jump host.

An aspect of this invention is to support configuration- and policy-driven ways to control user authentication and authorization on the downstream side and user authentication on the upstream side.

An aspect of this invention is to support a generic user authentication process built on top of the ssh-agent protocol.

### BRIEF DESCRIPTIONS OF THE DRAWINGS

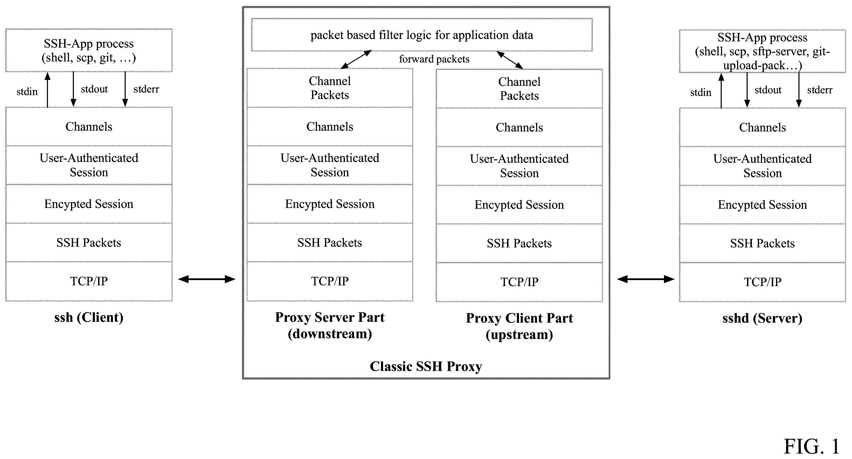

FIG. 1 refers to the Background section and shows how the SSH protocol is layered and interacts between client core application, application-layer processes on the client side and on the server side. SSH proxy solutions know so far, show the same layers on a downstream and upstream side of the proxy with a packet-based filtering engine on top.
FIG. 2 illustrates the high-level building blocks of the application-layer SSH proxy of this invention.
FIG. 3 illustrates how a flexible task chain is used to connect the upper part of FIG. 2 effectively.
FIG. 4 shows how tasks of the flexible task chain of FIG. 3 are currently defined and how the object classes derive from each other.
FIG. 5 illustrates how the SSH Proxy invention can operate in a "jump-host-to-self" mode.
FIG. 6 illustrates the flow for a policy-driven server authentication leveraging an SSH agent on the client.
FIG. 7 presents a flow chart describing an embodiment of the policy-controlled user authentication flow.
FIG. 8 illustrates one embodiment of an AuthDatabase used in the policy-controlled user authentication flow.
FIG. 9 presents a flow chart describing an embodiment of the policy-controlled process to open a channel and to install a task chain on the application-level.
FIG. 10 presents a flow chart describing an embodiment of a generic application-level App Proxy Task flow.
FIG. 11 presents a flow chart describing an embodiment of the Policy Channel task.
FIG. 12 presents a flow chart describing an embodiment of the Data Multiplexer task.
FIG. 13 illustrates how the decoupling of SSH packet handling and application-level proxy and the separate window management on both sides of the proxy work with an example of a larger file upload via the SFTP protocol over SSH.
FIG. 14 illustrates an example of the autonomous and independent window management.
FIG. 15 illustrates a flow chart of one embodiment for of the window adjust process.
FIG. 16 illustrates an example of policy engine contexts being maintained across multiple policy engine unit triggers during an SSH session.

### DETAILED DESCRIPTION OF THE INVENTION

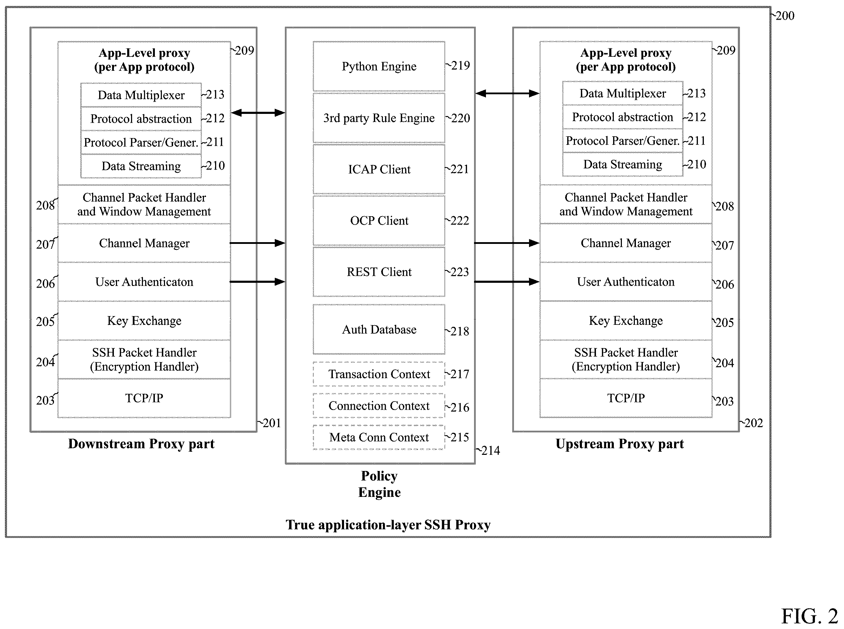

FIG. 2 illustrates the main components of the application-layer SSH Proxy **200** of this invention. When a client opens an SSH connection to the SSH Proxy, then the incoming SSH connection arrives as an incoming TCP/IP connection at the listener port of the SSH Proxy. For each incoming TCP connection from a client, an instance of the Downstream Proxy unit **201** is created.

For some connections, either due to protocol errors, due to user authentication failures, due to policy engine unit decisions or because the functionality can be provided by the SSH Proxy directly (e.g. local echo server), no upstream component will be necessary.

If the connection to the upstream server is needed, an instance of the Upstream Proxy unit **202** will be created. The Upstream Proxy unit opens an outgoing SSH connection on top of a TCP/IP connection to the final SSH server (or to a parent proxy server or jump host).

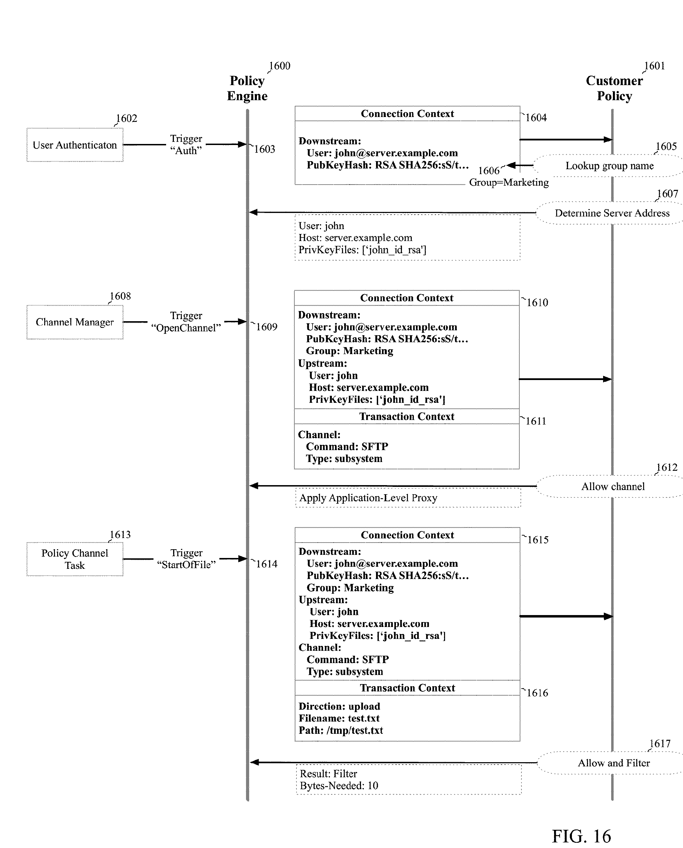

The Policy engine unit **214** is called several times during the workflow and maintains context objects for the connection **216** and for the current transaction **218.** FIG. 16 will illustrate this concept with a specific sample flow.

For each downstream and the upstream part, the various SSH protocol layers are implemented and illustrated as the TCP/IP communication layer **203** with asynchronous non-blocking socket communication triggering tasks within working threads to process ingoing and outgoing data. The initial data sent in SSH is a line of text specifying the SSH protocol version.

All following data is structured as a binary SSH packet and handled by the SSH Packet Handler **204** for incoming and outgoing data. The initial packets are not yet encoded and used by the Key Exchange **205** (KEXINIT) logic to negotiate the authentication and encryption protocols to be used. Details about the connection (downstream and upstream) are maintained in the Connection Context **216.**

Once the encrypted session has been established all upcoming packets are encrypted and the user authentication process **206** starts. If the User Authentication has validated the public/private key authentication of the user, it looks up details of the user in the Auth Database **218** and then triggers the policy engine unit **214** with a "UserAuth" policy trigger to review, alter or overwrite the results of the Auth Database lookup.

If the result of the policy execution reveals that the user is allowed to connect to a server (either a server given by the user, or given by the Auth Database or overwritten by the policy and which user and user authentication shall be used for the upstream connection, the upstream instance **202** is created and the workflow **202-206** is executed asynchronously on the server-side connection. Context information about the user that was determined is collected within the Connection Context **216** of the policy engine unit.

If the user has been denied by either the User Authentication **206** or the Auth Database **218** and policy transaction, then the user is denied on the client side and the client may try a different user authentication process on the existing connection.

If successful, the client will now open a first channel and provides information in the open channel message which shell, command or subsystem it wishes to handle on that channel. The Channel Manager **207** initiates another policy transaction checking whether the customer policy allows this kind of request under consideration of the collected Policy Context (connection and user information, as well as Meta Policy Context **215** across all open and historic connections).

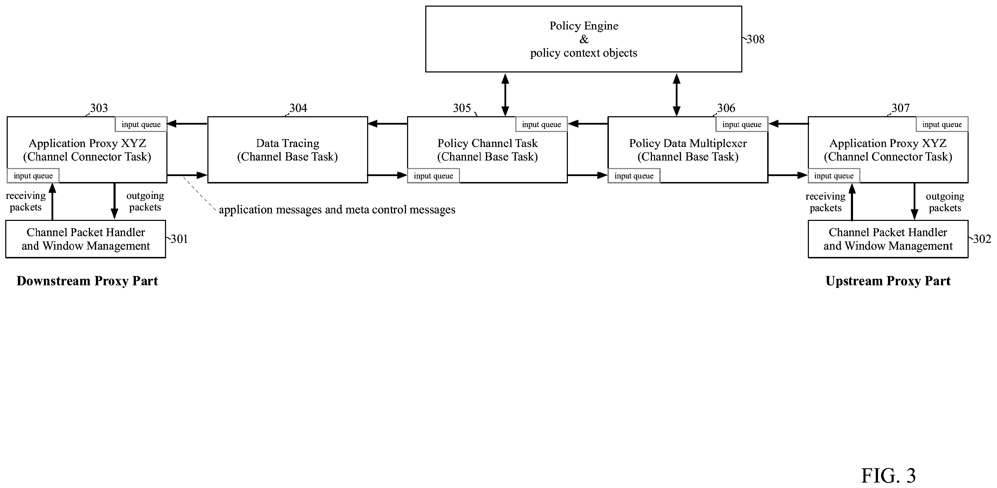

The policy result also determines whether the standard application-level proxy shall handle the data, or whether the connection shall use a generic data proxy. This results in a task chain been created at this point and described below as part of FIG. 3.

Multiple command channels can be supported but are forbidden by default policy.

For each open channel, the Channel's Packet Handler **208** runs independently of other channels, it processes incoming data packets and keeps track of its own window size and the window size of the SSH peer. It sends and processes window adjust packets automatically.

Incoming data packets are handed over to the allocated App level proxy **209** instance (or more precisely to the initial app proxy connector task described in FIG 3.) that runs asynchronously from the Channel Packet Handler **208.**

Conceptionally, within the App Level proxy, the data is prepared by a Data Streaming component **210** which overcomes SSH packet boundaries for application messages. Each supported SSH application has a Protocol Parser/Generator component **211** to parse the application-layer protocol and to generate application-layer protocol messages. In order to consolidate similar functionality across different application-layer protocols (for example SCP and SFTP) a Protocol Abstraction component **212** creates more generic internal messages (such as "Start-of-File") to support the Policy engine unit to run unified policies across multiple application-layer protocols. For application-layer protocols that allow for multiple transactions to happen in parallel, a Data Multiplexer component **213** takes care of supporting parallel policy transaction flows.

The Policy engine unit **214** sits in between the downstream and the upstream part of the proxy. It maintains Policy Context objects for connection specific properties **215,** for the individual application-level transaction (e.g. a file download) **216** and for context information that spans across all the current and recent instances of proxy connections **217.** All context objects are flexible JSON object structures allowing to add arbitrary property information to the context that is built up over time.

Policy decisions for new connections and authentications are prepared using an Auth Database **218** which implements a public key centric approach to quickly configure which users and hosts shall be supported by the SSH Proxy; its structure is aligned to the configuration file of an SSH Server. The final decision for any of the policy triggers during a connection and its transactions will be taken by a very flexible actual policy or rule engine. The default engine is the Python Engine **219** that enables an administrator to provide Python code to determine the verdict of the policy. The Policy Context information is translated into a Python dictionary that the administrator can query during the policy run. An "sshproxy" Python module allows to access additional data, such as the payload of a file transfer.

For integrations into other SSE solutions, the Python Engine is replaced by the specific third-party rule engine **220** of the hosting solution. The flexibility with internal JSON structures and asynchronous, parallel policy calls with interrupt and resume mechanisms supports the integration into a large verity of SSE solutions.

If the actual policy engine unit is external, the internal SSH Proxy policy engine unit provides interfaces for ICAP **221,** for OCP **222** and for generic REST API calls **223** to trigger policy execution on corresponding callout servers. The interrupt and resume mechanism of the internal engine allows to wait for the network calls from the external policy servers to return. The generalized policy messages from the Protocol Abstraction component **212** allow for a translation into calls that are understood by the external servers.

FIG. 3 illustrates a more detailed view of how App-Level proxies **209** are built and connected via the Policy engine unit **214.** The Channel Packet Handler and Window Management component **208** of FIG. 2 is re-illustrated as component **301** for the downstream side and component **302** for the upstream side in FIG. 3.

When the policy run for the "OpenChannel" triggered transaction has determined that the channel will be allowed and which proxy level functionality shall be used (application-level proxy vs. generic data-level proxy), then a dual-linked chain of channel tasks is created and placed in between the Channel Packet Handlers **301** and **302.** Depending on the policy result and the application-level protocol in-use, this chain of channel tasks can look rather different. FIG. 3 illustrates a typical example for an allowed transaction of an SSH application protocol named XYZ. A task chain for SFTP could look exactly like this (then using Application Proxy SFTP in components **303** and **307).**

The Application Proxy components **303** and **307** have a special capability that the other tasks do not have. They connect to a channel of either the downstream part and the upstream part and accept either chain messages from the task chain or SSH data packets from the Channel Packet Handler. Those SSH data packets are then processed as a data stream which provides the input for the application-level protocol parser. When a protocol message has been parsed, this may cause one or more task chain messages to be created and forwarded to the next component in the stream. For example, component **303** will parse the data stream driven by the SSH data packets and if it finds a message indicating the start of file upload, it will create an "Start-of-File" message and will send that to component **304.**

Task chain messages processed by a chain task component and then forwarded to the next component in the chain in most of the cases. For example, a message generated by component **303** will be forwarded to component **304,** which forwards the message to module **305,** which forwards to **306** and then finally to **307.** The message arrived in the Application Proxy component **307** may then result into one or more data packets that the application protocol generator of component **307** is generating and are then provided to the connected Channel Packet Handler **303** to send across the SSH connection upstream.

Messages arriving from the SSH server side at the Upstream Proxy unit are flowing in the opposite direction thru the task chain (from component **307 to 306, 305, 304** and eventually to **303** where it might be translated back into SSH data packets.

Each channel task is prepared to run asynchronously and to interrupt and resume the processing (for example, if it waits for additional data or if it waits for external events). A task that may need to interrupt the flow, will leverage its input queue to ensure that its neighbor tasks can always provide new task chain messages and to process them in FIFO order. Some components are guaranteed to run without interrupts. The Data Tracing component **304** is such an example. It has been added after the OpenChannel policy run into the task chain because the administrator has selected for detailed tracking of this transaction and the Data Tracing module writes a log file of all the channel task messages flowing thru the chain.

The Policy Channel Task **305** will watch for specific task chain messages. For example, s "Start-Of-File" message will trigger a new transaction for the Policy engine unit **308** to query whether this file shall be allowed by the known properties at start time (mostly the file path). If the transaction results in an "allow" verdict, the task chain message is forwarded within the task chain. If the transaction result in a "block" verdict, the Policy Channel Task **305** creates a new task chain message describing the block event, including an end-user error message provided by the policy engine unit. Instead of forwarding the "Start-Of-File" message in the task chain, it sends the "Block" message in the opposite direction thru the task chain. When the "Block" message arrives in the App Proxy component **303,** it generates the appropriate block message in the application protocol as if that was generated by the destination server. The Policy Channel Task **305** module runs completely asynchronously from the other tasks and supports any number of interrupt and resume events caused with the specific policy engine unit and policy code connected.

The Policy Data Multiplexer task **306** may not have been part of the initial task chain but can be inserted into the chain at a later time after the policy for an SFTP upload/download has determined that additional policy shall be triggered on file content. If the policy concluded that the data transfer is allowed without content scanning, this component can also be skipped completely, otherwise the module remains transparent and directly forwards messages. If enabled, the Policy Data Multiplexer **306** creates and manages separate policy engine unit transactions with different transaction contexts for parallel file transfers occurring for example during an SFTP directory transfer.

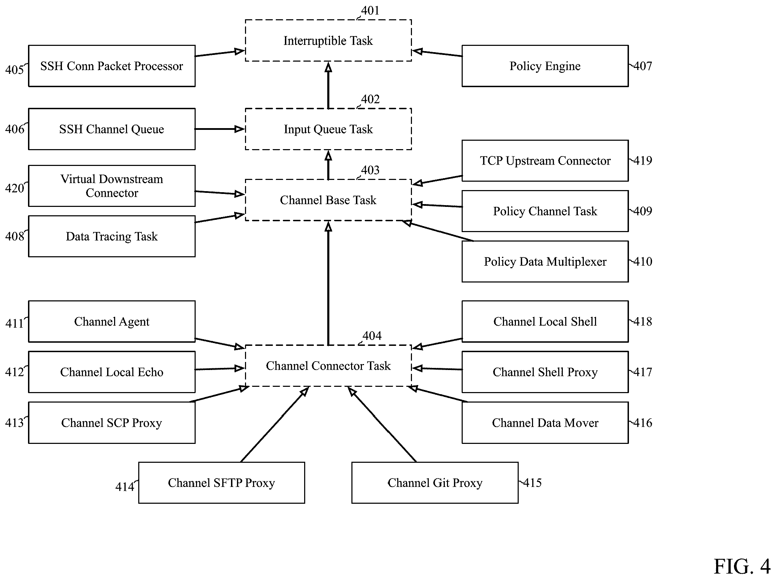

FIG 4. shows a class inheritance diagram, illustrating how the various components implement their asynchronous functionality and which components can be replaced by other components depending on the policy verdicts. The Interruptible Task **401,** the Input Queue Task **402,** then Channel Base Task **403** and the Channel Connector Task **404** are all virtual base classes that define common attributes and behavior. The other classes derive from these virtual base classes.

The Interruptible Task **401** is the base class for all other classes shown in FIG 4. This implies that all other classes have the ability to run asynchronously of each other and be interrupted for another sub task or an external event being executed before the original task is resumed.

The Input Queue Task **402** extends the Interruptible Task **401** by the ability to receive input objects in a First-In-First-Out Queue. If an Input Queue Task is not yet running, the insertion of an object will trigger the task to run. It will then process all input tasks in the queue until the queue will be empty.

The Channel Base Task **403** extends the Input Queue Task **402** so that it can be linked in the double-linked task chain illustrated in FIG. 3.

The Channel Connector Task **404** extends the Channel Base Task **403** so that it can also connect to the Channel Packet Handler and Window Management part of the SSH Channel Queue **406.** All application-level proxy components are derived from the Channel Connector Task class.

The SSH Conn Packet Processor **405** derived from the Interruptible Task **401** is used within the downstream and Upstream Proxy units **(201** and **202)** to process and send SSH packets on a per-connection scope.

The SSH Channel Queue **406** is derived from the Input Queue Task **402** to process packets that belong to a specific channel and decouples the individual channel packet processing of parallel channels from the general connection packet processing.

The Policy engine unit **407** is derived from the Interruptible Task **401** class to enable an independent asynchronous execution of policies.

Tasks **408-410** are derived from the Channel Base Task class **404.** The Data Tracing Task **408** has been described as component **304** in FIG. 3. The Policy Channel Task **409** has been shows as component **305** and the Policy Data Multiplexer **410** is component **306** in FIG. 3.

Components **411-418** are all derived from the Channel Connector Task class **404** and mostly implement specific application-level protocols. When support for additional application-level protocols is added, a new sub class of the Channel Connector Task will be implemented and other functionality from the other task modules can be reused.

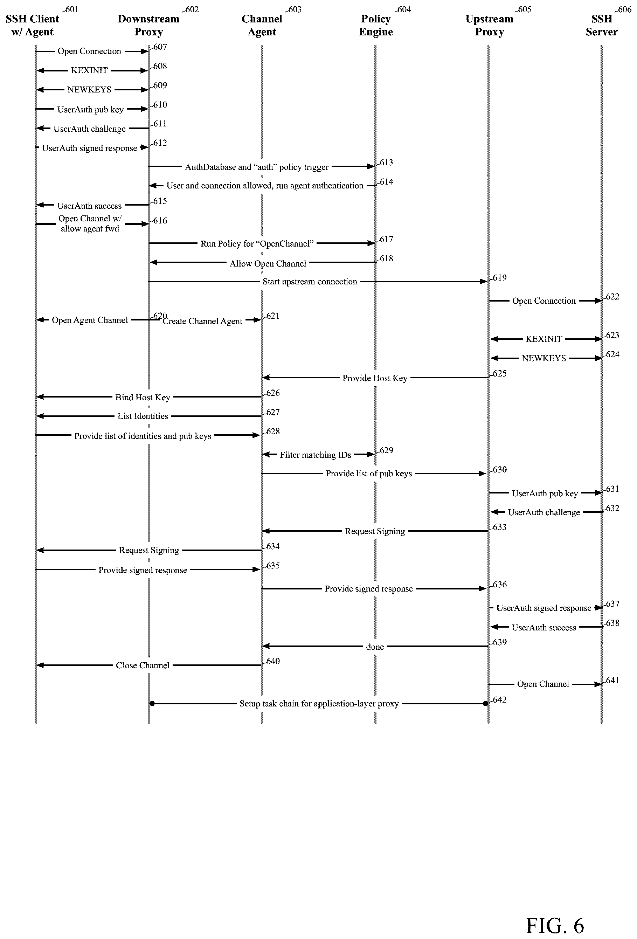

The Channel Agent **411** implements the protocol specified in Internet Draft draft-miller-ssh-agent and drives the channel communication with an SSH agent for remote authentication as illustrated in FIG. 6.

The Channel Local Echo **412** is a task used for testing as it provides channel output of a requested size and is used in functionality and performing testing of the product.

The Channel SCP Proxy **413** implements the classic SCP protocol that was used by the scp application before it switched to leverage the SFTP protocol by default.

The Channel SFTP Proxy **414** implements the SFTP application-layer protocol specified in the Internet Draft draft-ietf-secsh-filexfer and is used by default in modern version of the scp application.

The Channel Git Proxy **415** implements the application-layer protocol that the git command uses when communicating via SSH with a GitHub server.

The Channel Data Mover **416** is used if the policy downgrades a connection to skip the application-layer proxy or if an application-layer protocol shall be filtered for which a specific proxy implementation is not yet available. The Channel Data Mover is still connecting channel task messages thru the policy engine unit to allow for generic Content Filtering by policy on a packet stream layer.

The Channel Shell Proxy **417** behaves like a virtual shell on the downstream side and like a terminal client on the upstream side to parse shell commands and responses and to translate them into task chain messages for filtering, blocking and modification.

The Channel Local Shell **418** is used if an incoming shell request is not proxied to a remote server but provides an interface for a user or administrator to communicate with the SSH Proxy solution directly via an SSH shell. Commands entered on this local shell can execute internal functionality such as a call for statistical data, a command to properly shut down the SSH Proxy, etc.

The TCP Upstream Connector **419** is optionally used on the upstream proxy side in case that a "direct-tcpip" SSH channel is requested and allowed by policy so that the upstream end of the task chain will not be sent to an upstream channel but will be directly sent via TCP/IP to a destination server. In this case, the Channel Connector Tasks on the downstream proxy side and on the upstream proxy side will be different (Channel Data Mover **416** on downstream side and TCP Upstream Connector **419** on the upstream side).

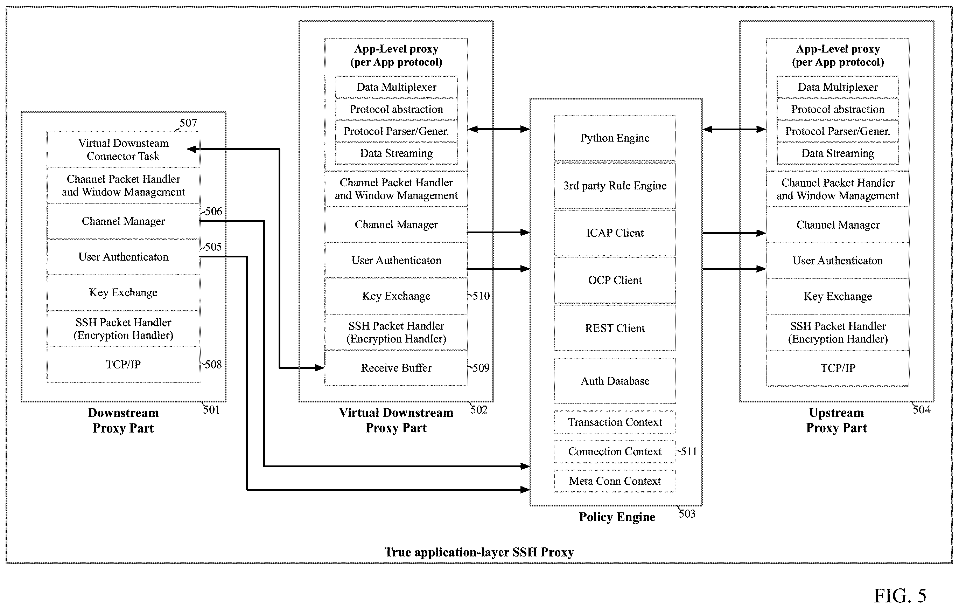

The Virtual Downstream Connector **420** is another special task used when an SSH Proxy is running in a special jump-host-to-itself mode as illustrated in FIG 5.

The SSH Proxy **500** in FIG. 5 corresponds to the SSH Proxy **200** in FIG 2 adding another indirection although still possible to run all in a single process. SSH users in corporate environments are used to leverage a jump host configuration to access a remote SSH server. An SSH command for this can look like "ssh -J localUser@jumphost.example.org remoteUser@server.example.org". In this configuration the ssh program opens a first connection to the jumphost server and after successfully authenticating as "localUser", it will request a channel that shall open a TCP connection to "server.example.org" and to forward all channel data to that TCP connection, so that the ssh client can initiate a second session to the final server and login there as "remoteUser". Such as jump host configuration does not allow the jump host to inspect the data that it forwards because the ssh client and the final server are negotiating a separate end-to-end encrypted SSH connection so that the jump host only observes encrypted TCP data on its channel. By policy the SSH Proxy of this invention can be switched into a mode to virtually connect to itself before connecting to the final server.

In the normal Downstream Proxy unit **501,** after successful authentication and policy decision after the user authentication **505,** the policy engine unit is queried again by the Channel Manager **506** with the OpenChannel trigger and the "direct-tcpip" channel type. If the policy decides for the jump-host-to-self mode, a new Virtual Downstream Part **502** is created and the task chain connecting the Downstream Proxy unit **501** and the Virtual Downstream Part **502** only consists out of the Virtual Downstream Connector Task **507,** introduced in FIG. 4 as component **420.**

The Virtual Downstream Proxy unit **502** is the same as a normal downstream proxy instance instead that the TCP/IP component **508** is replaced by a simple Receive Buffer **509.**

The ssh client assumes to communicate now with the final server, instead it communicated with the Virtual Downstream Proxy instance **502** and negotiates with its Key Exchange component **510.**

Because the Downstream Proxy **501** and the Virtual Downstream Proxy **502** communicate with the same Policy engine unit **503** and have access to a common Connection Context **511,** the Virtual Downstream Proxy knows the hostname of the final destination server so that it can create an Upstream Proxy unit **504** that will connect to that server.

Beside the "jump-host-to-self" option to address the SSH Proxy server as an intermediate for the final server, the SSH Proxy of this solution allows the policy engine unit to select a fixed server address derived from the username and or from the public key of the user. This allows the ssh command or ssh-application client to directly specify the proxy address as the hostname. For example, if the username if the command is "ssh git@proxy.example.org", the client connects to the SSH Proxy and the AuthDatabase or the policy engine unit rules can determine that the final server to connect to is the customer's GitHub server.

Another method is to encode the final server's name into the username so that the SSH Proxy of this invention can programmatically determine the final hostname from the username. This allows users to address the proxy for example with a command like "ssh user@server.example.org@proxy.example.org". The ssh client connects to the proxy server under the name of "proxy.example.org" and the SSH Proxy receives the username "user@server.example.org" in the user authentication step. The SSH Proxy splits this name into the actual username "user" and the final hostname "server.example.org".

Because some ssh applications do not support usernames with multiple "@" characters, this invention also supports other delimiters such as an underscore. In order to distinguish a normal username using such delimiters (for example "firstname_lastname"), the invention recognizes optional delimiters if the name is also preceded by such delimiter, for example "_user_server.example.org_6789@proxy.example.org" which will be decoded into a username "user" at final SSH server "server.example.org" on port 6789.

This invention allows the AuthDatabase of the policy engine unit and the policy engine unit code to select a client certificate installed into the SSH Proxy or made available via an HSM module or HSM network service to be used in the upstream connection to the server.

Another option of the SSH Proxy of this invention is to leverage SSH Agent communication with the client to request the client to assist in the upstream user authentication process. This mode either requires the public key (but not the private key) of the user to be made known to the proxy server or to allow for any public key to be used and being allowed by the downstream user authentication. FIG. 6 illustrates an embodiment of such a flow.

The SSH client application **601** is offering access to the SSH Agent with at least one identity and public key exposed. Allowing access to the SSH Agent is typically controlled either thru a command parameter ("-A" for ssh) or thru configuration ("ForwardAgent yes").

The client opens a connection **607** to the Downstream Proxy unit **602** of the SSH Proxy. The piers negotiate the encryption **(608** and **609);** the user authentication process starts by the client presenting the public key **610,** the Downstream Proxy unit providing a challenge to the client **611** that it needs to respond to prove ownership of the private key **612.** The Downstream Proxy unit runs the "auth" policy **613** with the Policy engine unit **604** which may allow the user and indicate that the user shall be authenticated at the final SSH Server **606** leveraging the client's SSH Agent. The Downstream Proxy unit informs the client that the user authentication has been successful **615.**

The client opens a channel to request a shell, a command or a subsystem and adds a channel request to indicate that it allows agent forwarding for this channel **616.** If this agent-forwarding support is not indicated by the client and if the policy does not provide alternative user authentication methods against the SSH Server, then the connection will fail, no connection to the server can be established and the channel request for the shell, command or subsystem will be denied by the Downstream Proxy.

If support for the agent was indicated, the Downstream Proxy will trigger an OpenChannel policy **617,** potentially resulting in a positive response that this channel is allowed **618.**

The Downstream Proxy unit will start two asynchronous actions in parallel: It starts a new upstream connection **619** by creating a new Upstream Proxy unit **605.** And it creates a new Channel of type "auth-agent@openssh.com" to the client **620** and it creates a new Channel Agent **603** and links that as a task to the new channel **621.**

In parallel, the Upstream Proxy unit **605,** opens the TCP connection **622** to the SSH Server **606** and runs the key negotiation procedure **623.** With the final NEWKEYS message **624,** the host key of the SSH Server is known and will be provided to the Channel Agent **625** which sends a message within the agent protocol to the client to inform about the host key binding **626.**

Then the Channel Agent issues a command to the client to list the available identities and public keys it can provide **627.** The client responds with such a list **628.** The Channel Agent matches those ids **629** against the list of ids provided by the Policy engine unit during the "auth" policy run **614.**

The resulting list of matching public keys are provided to the Upstream Proxy unit **630.**

The Upstream Proxy unit selects the next available public key of the list to present it to the SSH server **631** and the server responds with a challenge **632.**

The Upstream Server part calculates the data that needs to get signed and sends the signing request to the Channel Agent **633** that creates a signing message in the Channel Agent protocol and sends it to the client **634.**

The client uses the agent to sign the request and sends the responds to the Channel Agent **635** that forwards the signed data to the Upstream Proxy Server **636** that can send it to the SSH Server **637.**

If the SSH Server does not accept the signed user identity, the Upstream proxy can delete the current public key from the list it received in step **630** and can continue with the next available public key **631.**

If the SSH Server accepts the user authentication **638,** the Upstream Server signals to the Channel Agent that the authentication is done **639** and the Channel Agent closes the channel with the client.

In parallel, the Upstream Proxy unit can open the original channel **641** that was requested by the client in step **616.**

When the channel has opened, Downstream Proxy and Upstream Proxy set up the dual-linked list of tasks **642** as shown FIG 3.

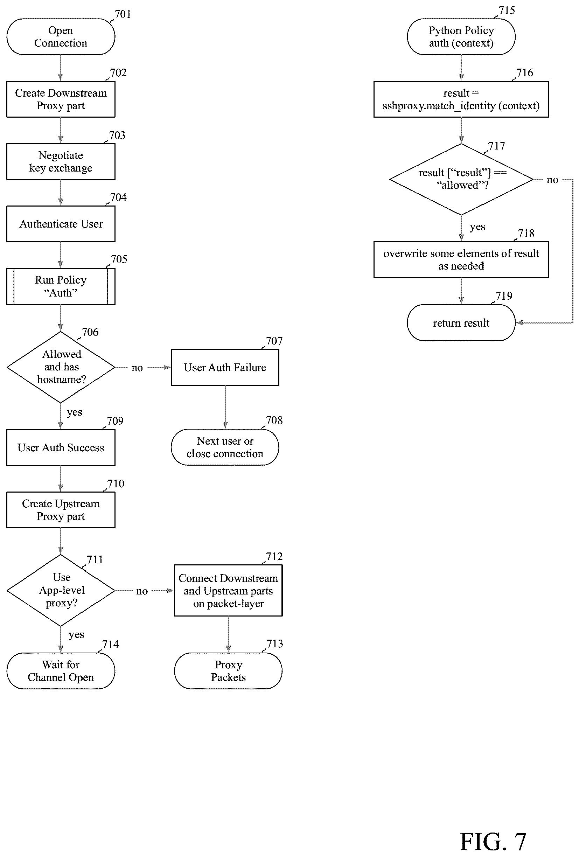

As illustrated in FIG. 7, when an SSH client opens a new connection to the SSH Proxy **701,** and creates a new instance of the Downstream Proxy unit **702.** The client and the Downstream Proxy unit of the SSH Proxy negotiate the key exchange algorithms **703** and the user authentication process **704.**

Once the user's public key authentication has been validated but before the final user authentication response message (user authentication success or failure) is sent, the Policy engine unit is called to run the "auth" policy routine **705.**

In one embodiment of the invention the policy routine is a Python method under full control of the customer's administrator. A Python flow for the "auth" routine is presented with the available connection context in form of a Python dictionary **715.** The administrator has complete freedom to execute any Python script as this routine as long as a result dictionary is returned **719.**

A suggested Python script starts to call a Python method provided by the SSH Proxy (sshproxy.match_identity) to lookup the authenticated user in the AuthDatabase **716.** This method already sets the result dictionary to the value found in the AuthDatabase or sets the result to "deny" in case that no match for the authenticated user is found. Also this methods splits the username at its delimiters into the actual username, an embedded hostname and port und puts these into the result dictionary.

The Python script can now use any other function to overwrite or finetune specific results, for example, by adjusting a hostname or looking up additional users in a remote database **717** and **718.**

In all the supported Policy engine unit embodiments, the result of the policy is translated into a JSON object (for example, the Python result dictionary is translated into JSON format) and provided back from the Policy flow subroutine **705.**

The Downstream Proxy unit checks in the result JSON object whether the user is allowed and whether a hostname for a destination SSH server could be evaluated by the policy **706.** If that is not the case, the user authentication process is responded with a failure message **707** and the client is given the opportunity to either re-authenticate a user with other credentials or to close the connection **708.**

If the policy has provided the required data, the user authentication process is responded with a success message **709** and an Upstream Proxy unit is created **710.** The Upstream Proxy unit starts an asynchronous process to connect to the final SSH server.

If the policy result has requested a transparent proxy setup **711,** the Downstream Proxy unit and the Upstream Proxy unit are connected **712** to asynchronously and transparently exchange packages after the Upstream Proxy unit has successfully negotiated its key exchange algorithms and has authenticated the upstream user **713.**

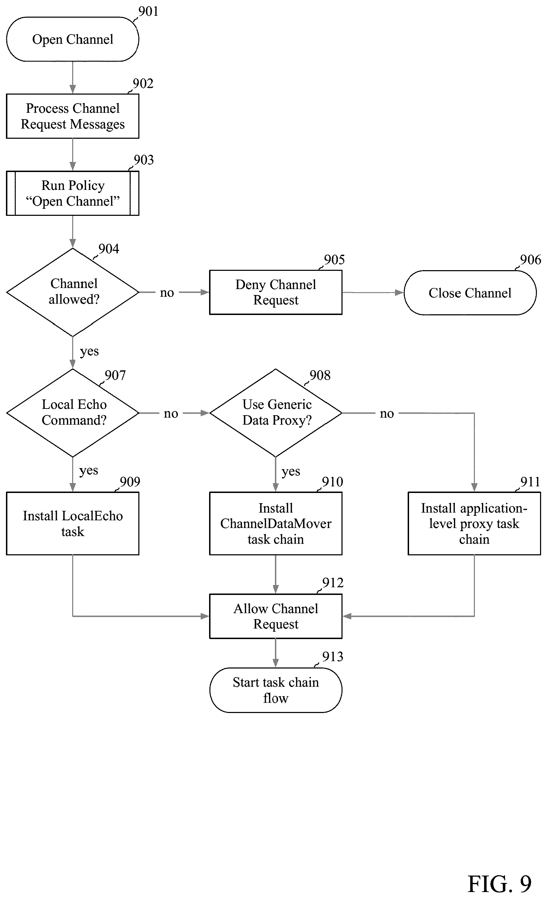

The default response of the policy result is to start the application-level proxy flow. The Downstream Proxy unit waits for at least one channel to open **714** before continuing with that flow as illustrated in Fig. 9.

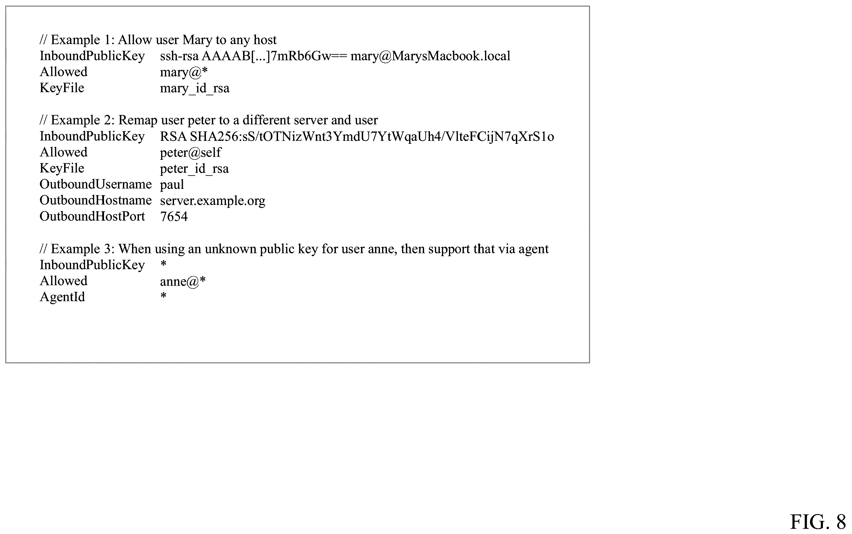

FIG. 8 illustrates examples of entries in the AuthDatabase that an "auth" Policy engine unit flow can leverage as shown in **716.**

In one embodiment the AuthDatabase can be given as a text file with entries given as paragraphs of text lines and comment lines. Each entry starts with an InboundPublicKey key word and provides the public key used in the user authentication process with the Downstream Proxy unit either as an SSH public key or as an SSH public key fingerprint.

In the first example of FIG. 8 a user "mary" is identified by her SSH public key (on the figure the key is abbreviated for illustration purposes). The username that has to be used in combination with this public key must be "mary" and the SSH proxy allows this user to connect to any SSH server. The Upstream Proxy unit will use a locally available key file "mary_id_rsa" to authenticate the user "mary" at such SSH server.

In the second example of FIG. 8 a user "peter" is identified by his SSH public key that has the given RSA fingerprint and if used with the username "peter" at the Downstream Proxy unit and if the SSH Proxy is addressed as an SSH server (for example if the user issues a command like "ssh peter@proxy.example.org"). Although the proxy is addressed as a server, the proxy switches into proxy mode and instructs the Upstream Proxy unit to connect to an outbound hostname "server.example.org" at port 7654 and with the different username "paul" and a locally available private key file "peter_id_rsa".

The third example of FIG. 8 shows a configuration to allow any other public key for a user named "anne" who is allowed to connect to any server thru the proxy. The user authentication is done via all available public keys handled thru the SSH Agent flow as illustrated in FIG 6.

The flow in FIG. 9 starts when the Downstream Proxy unit processes a message from the client to open a new channel **901.** At the beginning of a new channel, the client sends one or more Channel Request messages specifying the type of the channel. A final message either requests to open a shell, to execute a command or to initiate a subsystem **902.** This will trigger the Policy engine unit to run the "Open Channel" routine **903.**

The context object at this point includes all context information about the downstream connection, about the upstream connection and about the channel request. In one embodiment of the invention the policy routine is a Python method under full control of the customer's administrator. The result of the policy run is translated into a JSON object that is examined by the Downstream Proxy unit.

A first check of the result is whether the channel with the requested shell, command or subsystem shall be allowed **904.** If not allowed, the Downstream Proxy unit sends a deny message in response to the channel request **905** and closes the channel **906.**

If the channel is allowed by policy, the Downstream Proxy unit of the SSH Proxy checks if a specific command shall trigger an internal action of the SSH Proxy, for example by replying a local echo functionality to generate test messages **907.** If this is the case, a special task is installed **909** to act instead of the standard task chain connecting Downstream Proxy unit and Upstream Proxy unit. In one embodiment, the installed part can be Channel Local Echo task **412.**

If no special command shall be executed, the Downstream Proxy unit checks whether the policy demands the functionality to be downgraded from application-level proxy to generic data proxy handling **908.** If yes, two instances of the Channel Data Mover task **416** and a Policy Channel task **409** are installed as the task chain **910.**

If the policy did not decide for a special handling, by default, the Downstream Proxy unit will install application-level proxy tasks, that match the detected command or subsystem, for example a Channel Git Proxy task **415** in case of a command of the git family, together with a Policy Channel task **409** as the task chain **911.**

In each of the cases **909, 910** or **911,** the channel request of the client is responded with an allow message **912,** a task chain like shown in FIG. 3 has been installed, the Policy engine unit context objects have been enriched with all collected information and the open channel flow finishes with the active task chain **913.**

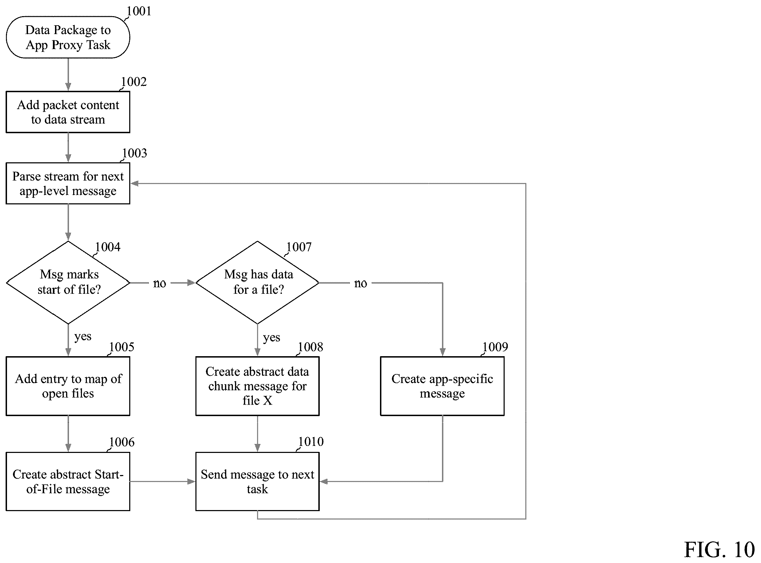

As shown in FIG. 3 and FIG. 9, a typical task chain between the Downstream Proxy unit and the Upstream Proxy unit starts and ends with an instance of a protocol-specific App Proxy Task. FIG. 10 shows the flow chart of a possible embodiment of an unnamed protocol that can be used for data transfer (such as SCP or SFTP). While other App Proxy Tasks like the Channel Shell Proxy have a fixed behavior for when they are connected to the Downstream Proxy side (a virtual shell) versus are connected to the Upstream Proxy side (a virtual terminal client), the Channel SCP Proxy and the Channel SFTP Proxy have a bidirectional implementation, where the instance connected to the Downstream Proxy can either be the data source or the data sink for the remote copy operation and the instance connected to the Upstream Proxy then running the opposite (data sink or data source) behavior. As such the start in the flow in FIG. 10 is denoted for the instance running at the data source side.

Data packages received on the data source side trigger the task **1001.** The payload of the data packet is added to the data stream **1002** and triggers the asynchronous application-level message parser of the App Proxy Task **1003** (if it is not running already).

If the available data in the data stream is not sufficient to scan a complete message, the App Proxy Task is interrupted and will be resumed when new data arrives at the data stream.

When a full application-level message could be parsed, the App Proxy checks if that message marks the start of a new file copy **1004.** If that is the case, then it creates an entry for the multiplexer, mapping the new file to a unique file identifier **1005** and it replaces the application-specific start message with a higher abstracted Start-of-File message of the SSH Proxy solution **1006.** This higher level Start-of-File message is forwarded to the next task **1010** in the Channel task as illustrated in FIG. 3.

If the full application-level message denotes a chunk of data for a file being copied 1007, then the App Proxy Task creates an abstracted higher-level message describing the new data chunk and associates that with the file identifier of the specific file **1008** and then forwards that abstracted message to the next task **1010.**

For other app-specific message types that do not have a higher-level abstracted message defined, the App Proxy creates and application-specific message **1009** that it forwards to the next task **1010.** It is to be assumed that no other task in the task chain will be able to interpret such a message so that it will flow transparently thru the task chain until it arrives at the second instance of the App Proxy task at the data sink side where it can be translated back into the appropriate action for the application protocol.

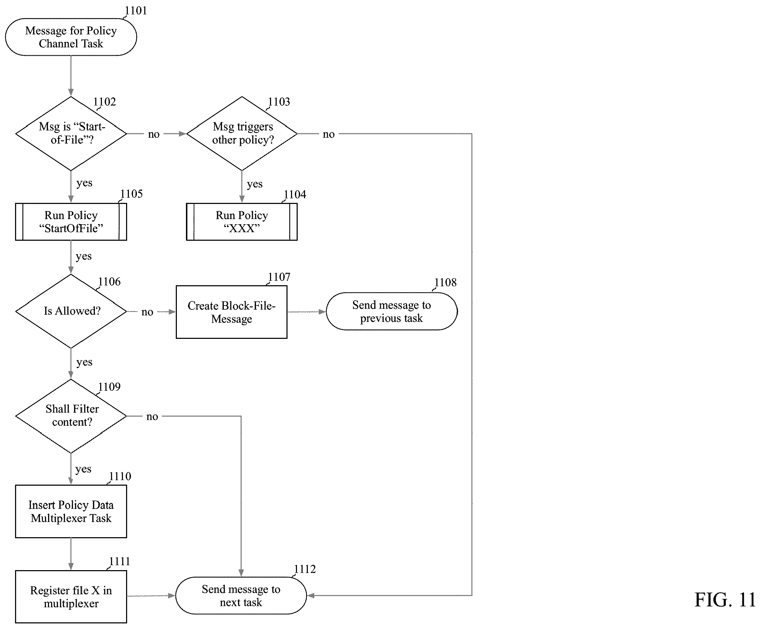

The Policy Channel Task is another task installed in the task chain between the Downstream Proxy unit and the Upstream Proxy unit as illustrated in FIG. 3. The flow within the Policy Channel Task is illustrated in FIG. 11.

When a message is received **1101,** the Policy Channel Task checks whether this is a "Start-of-File" message **1102.** If that is not the case, then the Policy Channel Task checks whether this is another message type for which it should start a policy routine **1103** and if so, it runs such policy **1104;** otherwise, messages are forwarded to the next task in the chain **1112.**

If a "Start-of-File" message was received, the Policy Channel Task adds the message information to the transaction context and calls the Policy engine unit to run the policy routine "StartOfFile" **1105.** This policy is under full control of the customer's administrator and has the full context including the connection context and the transaction context, collected up to this point, available to make a verdict. Due to the abstracted message type, a single policy can be used to check whether the file is allowed to be copied independent of whether the file is transferred with the SCP protocol, the SFTP protocol or any other application-level protocol for file transfer via SSH. The result of the policy will be translated into a JSON object that the Policy Channel Task can check.

If the result indicates that the file is not allowed to be copied **1106,** then the Policy Channel Task create a higher-level Block-File-Message **1107** and sends that back to the previous task **1108** so that the message flows in the opposite direction in the task chain back to the data source App Proxy Task. Here the message will be translated into an application-specific block message.

If the policy verdict allows the file transfer the Policy Channel Task checks whether the policy requires also content scanning of the file **1109.** If no content-filter is required, then the file will bypass the content filter and the message is forwarded to the next task **1112.**

If content filtering is requested by policy, the Policy Channel Tasks creates a new Policy Data Multiplexer Task (if not already done for an earlier file) and inserts that as the next task in the task chain between itself and the current next task **1110.** Then it registers the file X for the multiplexer to act on **1111** and forwards to message to the next task **1112** (which is now the Data Multiplexer task).

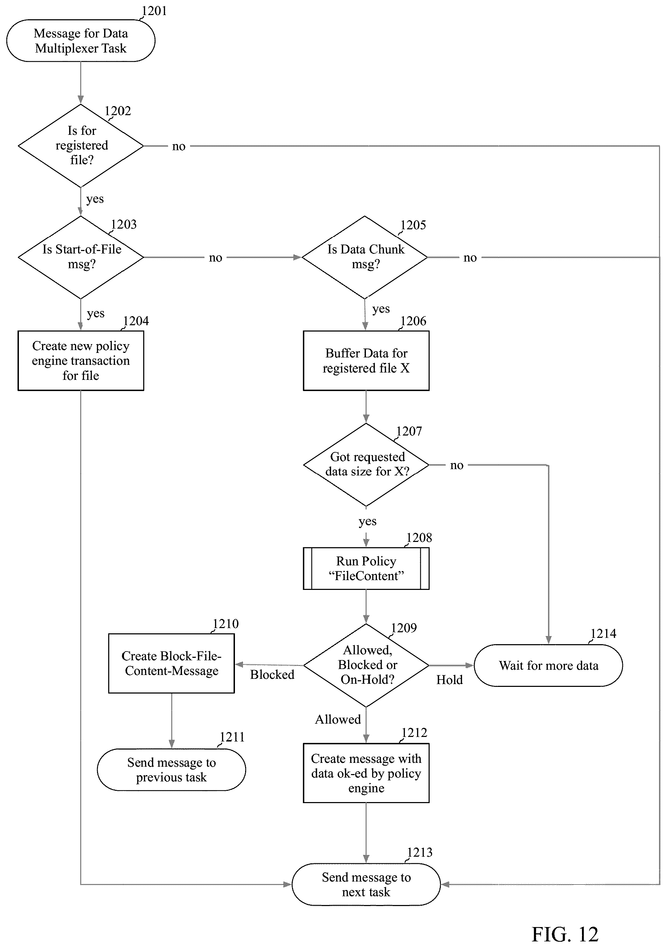

If the Data Multiplexer task has been installed for one or more files, then its flow is illustrated in FIG. 12. The task is triggered by a new message arriving **1201.**

The Data Multiplexer Task checks whether this is a message aligned to a registered file for the multiplexer **1202.** If that is not the case, the message is forwarded to the next task **1213.**

If the message is for a registered file, then the Data multiplexer checks whether this is the initial Start-of-File message for this file **1203.** If yes, then it creates a new policy engine unit instance for this file **1204** before it forwards the message to the next task **1213.** For parallel file transfers several policy engine unit instances can exist in parallel and they all share the same connection context object but individual transaction context objects for their specific file.

If a Data Chunk message is received **1205,** then the received data is added to a buffer aligned to the transaction context of the registered file **1206.**

The initial "StartOfFile" policy run as well as previous "FileContent" policy runs have returned the amount of data that they request to be waited for, before they are called again with file content (if that size is zero, the policy is triggered for each chunk of data received). When the requested size has been reached **1207** (or if the end of the file has been reached), then the policy routine "FileContent" is triggered with the specific transaction object **1208.** Depending on the number of data chunks received from the SSH client or SSH server and the next requested size, the "FileContent" policy routine can be triggered many times during the upload or download of a file. The transaction context object contains a reference to the buffered data. In the Policy engine unit embodiment of the Python engine, the Python script can refer to the buffered file data via the "sshproxy.get_data(transID)" method. Until enough data has been received, the message is not forwarded in the chain but kept in the transaction context **1214.**

When the "FileContent" policy is triggered **1208** it will result in a verdict to continue to allow the data, to replace the content of the file with other data, to block the file exchange, for example because a connected malware scanner has found malware in the file that shall be blocked or to hold the data for now and postpone an allow/block verdict **1209.** If the verdict is "blocked", an abstracted Block-File-Content-Message is created **1210** and sent in the opposite direction to the previous task in the task chain **1211.**

If the current chunk of data is still allowed, the policy engine unit can advise how much data shall be collected until the next trigger of the policy routine and it can advise whether all or less of the buffered data shall already be forwarded to the next task and eventually to the data sink App Proxy task to be delivered to the data sink. Depending on the size of data that can be forwarded, the Data Multiplexer task created a new message with that data **1212** and forwards that to the next task in the chain **1213.** If the verdict is to continue to hold the data, the flow of this message is interrupted and not forwarded in the task chain but waiting for the next data chunk to be receive **1214.** For the last chunk of data, the verdict must be either allow, modify or block.

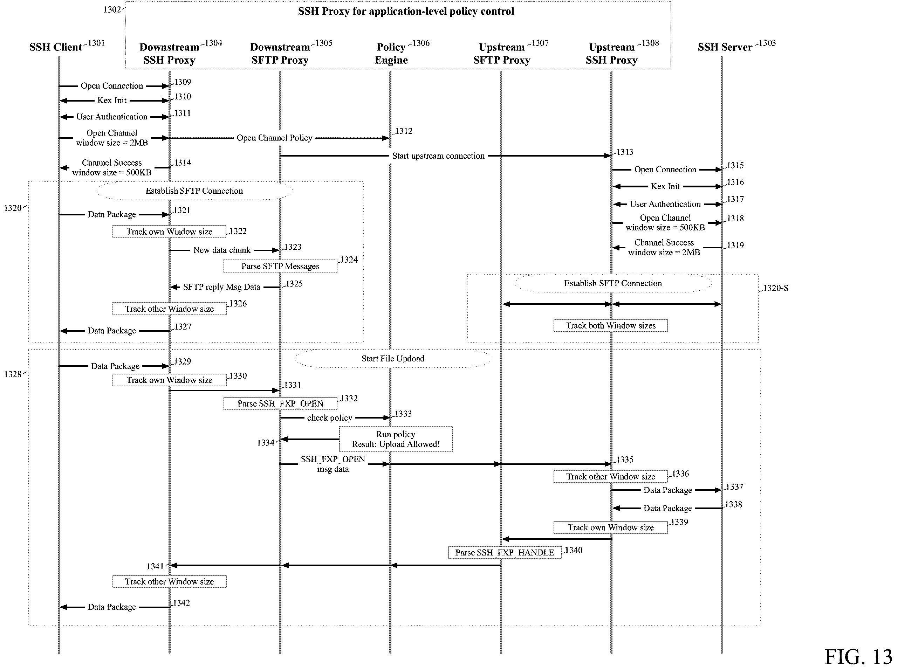

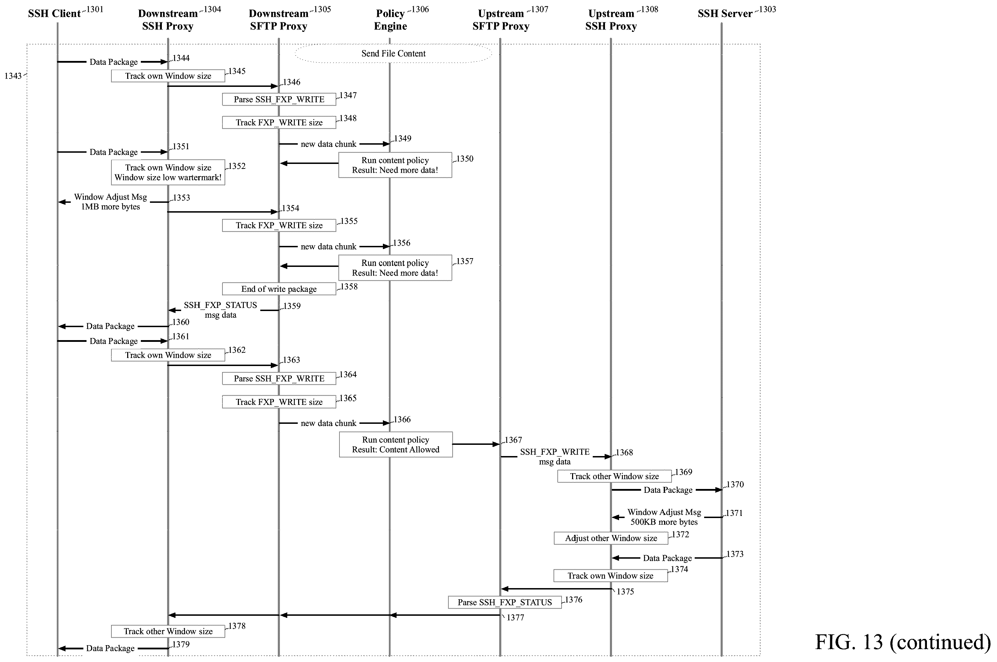

One key aspect of this invention is how the window size management between client and SSH proxy and between the SSH proxy and server are completely decoupled and how this principle is repeated on the independent application-level proxy layer. This is critical to support policy engine unit requests to pause the forwarding of data **1214** but continue to receive file data without stalling the connection. FIG. 13 illustrates this with the example of a file upload from a client **1301** via the SSH Proxy **1302** to an SSH Server **1303.** The SSH Proxy consists out of a Downstream component on the SSH protocol level **1304,** a downstream component on the application-protocol level (SFTP in this example) **1305,** a policy engine unit **1306,** an upstream component on the application-protocol level **1307** and an upstream component on the SSH protocol level **1308.** The components **1304-1308** are technically connected as illustrated on FIG. 3

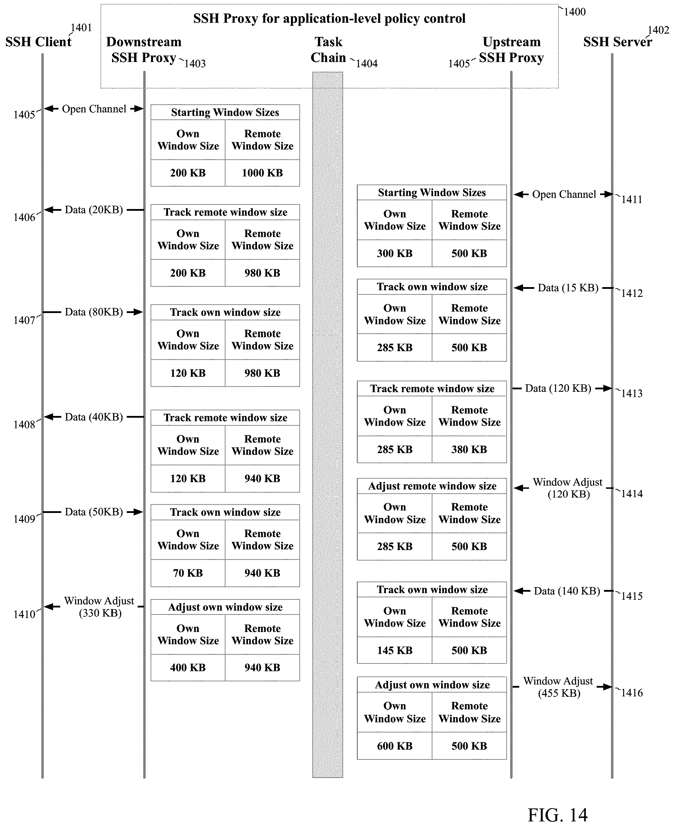

Opening of the channel is briefly shown in steps **1309-1319.** That workflow has been illustrated in larger detail in FIG. 6, FIG. 7 and FIG. 9. The new detail shown in FIG. 13 is the window size that is announced during the opening flow of the channel. The client opened the channel by indicating its own window size (2MB in this example) **1311.** The proxy confirms the channel opening after the policy engine unit's confirmation and provides an initial window size of 500KB. The proxy keeps track that it is now allowed to send up to 2MB of channel payload data to the client and the client will not send more than 500KB of data; either side would then stop sending data until the receiving side sends a window adjust message. This is a complexity of the SSH protocol that other protocols (like HTTP) do not have. On the server side, the negotiation also occurs. The proxy again provides its initial 500KB window size and the server provides a 2MB window limit. Note, that all four limits are completely separate from each other and are tracked separately! FIG. 14 illustrates how the SSH Proxy decides when to send window adjust messages.

While the upstream proxy component is still establishing the connection and the SFTP channel, the client can start to initiate the SFTP session on top of the SSH channel **1320.** When a first data packet arrives **1321,** the SSH Proxy tracks the received data against its own window size **1322** and then forwards the data chunk to the application-level proxy (here the SFP proxy) **1323.** The Downstream SFTP proxy parses the first message (SSH_FXP_INIT) **1324.** Note that one SFTP application-level message may be split across multiple SSH data messages and one SSH data packet can contain fragments of multiple SFTP messages. The SFTP downstream proxy can respond autonomously to the session establishing messages **1325** and sends the corresponding data to the SSH proxy level that sends one or more data packets to the SSH client **1327** and keeps track of the client's remaining window size **1326;** the proxy will not send any more data if the client window size goes down to zero and before a window adjust message was received. Establishing a channel normally takes more than one SFTP message because both sides negotiate additional capabilities; steps **1321** - **1327** can repeat multiple times.

In parallel to starting the SFTP session between the client and the proxy, the upstream proxy side establishes the session with the server **1320-S.** The messages exchanged are of the same type as in the **1320** flow but decoupled. Proxy and server may exchange slightly different capabilities. Because of the different message sizes, the window sizes tracked on the upstream side can also be different and the independence of these window management sides is a key aspect of this invention.

Once the SFTP session has been established, the client sends SFTP messages to start the file upload **1328.** Following the SFTP protocol this will likely be two messages (SSH _FXP_STAT to be responded with SSH_FXP_ATTRS and SSH_FXP_OPEN to be responded with SSH_FXP_HANDLE). FIG. 13 only shows second message pair: The data arrives with an SSH data packet **1329,** window size is tracked 1330, data is forwarded to the SFTP proxy **1331** and the open message is parsed **1332** (in the illustrated example the message fit into a single packet; it could require additional packets). The process to parse and forward the data in the task chain was illustrated in FIG. 10. The SFTP message is abstracted to a "Start-of-File" message which is forwarded in the task chain and involves the policy engine unit to check the customer policy **1333.** The process of the policy engine unit was illustrated in FIG. 11. In this example, the policy result is "allow" **1334.** The downstream side cannot yet respond with the client because it now also needs to see whether the server has a technical reason to deny the upload (for example because the receiving directory is write-protected); hence the message is forwarded to the upstream side **1335,** translated into SSH data, tracked against the server's window size **1336** and sent to the server **1337.** The server responds with a handle, and the data arrives **1338,** is tracked against the upstream window size **1339,** parsed by the SFTP upstream proxy as the SSH_FXP_HANDLE message **1340** and then forwarded through the tasks chain to the downstream proxy **1341** which tracks and sends the data to client **1342.**

The upload of the file content data is shown in the larger flow group **1343.** The first data arrives **1344** and is tracked against the window size **1345** and forwarded to the SFTP proxy **1346** where the SSH_FXP_WRITE message is parsed **1347.** This message has a size of data to be transferred and the downstream SFTP component starts tracking this size **1348.** It is important to understand that a large file might be transferred with multiple SSH_FXP_WRITE messages; in this illustration the file is sent with two SSH _FXP_WRITE messages **(1347** and **1365)** and the data of each SSH_FXP_WRITE message usually spans across many SSH data packets!

When the newly arrived file data is forwarded in the task chain and arrives in the data multiplexer of the policy engine unit **1349** triggering the "FileContent" policy as illustrated in FIG. 12, the policy engine unit might allow to forward the data immediately in the task chain but in FIG. 13 the policy engine unit first requires to see additional data and returns a "need more data" responds **1350.** No data can be sent via the upstream proxy side to the server yet!

In parallel additional data arrives **1351.** When that data size is tracked against the own window size, the Downstream SSH proxy component detects that the window size is reaching a low watermark (see FIG. 14) **1352.** Therefore, the Downstream SSH Proxy component sends its own Window-Adjust message to the client **1353.** Note that this happens completely independent from the SFTP proxy component and especially independent from the upstream components that have not yet seen any file data. Without sending such a Window-Adjust message autonomously, the SSH client would eventually stop sending any data when the window size would go down to zero which would cause a dead-lock in the whole file upload scenario as all components are waiting for each other!

In parallel to handling the Window-Adjust flow, the SSH proxy forwards the received data to the SFTP proxy task chain **1354** which tracks the size against the SSH_FXP_WRITE message size **1355** and forward this again to the policy engine unit **1356.** The policy engine unit still needs to see additional data **1357.**

The SFTP proxy has detected that all data from the first SSH_FXP_WRITE has been received **1358.** Therefore, it creates and sends an SSH_FXP_STATUS message autonomously towards the client **1359** and **1360.** Without sending this status message, the client would eventually stop sending new SSH_FXP_WRITE messages. But because the SSH server has not yet seen any data, it will not send the SSH _FXP_STATUS message to confirm the first part of the file data. Without the proxy sending such message, a deadlock would occur. This is similar to the window adjust problem as described above, but is now happening on the application protocol level and not on the SSH packet level.

New data packages arrive, containing the start and the content of the second SSH_FXP_WRITE message which is processed and forwarded in the task chain to the policy engine unit **1361-1366.** This time, the customer policy has sufficient data to allow the content and forwards the data in the task chain **1367.**

The upstream proxy can now create one or more SSH_FXP_WRITE messages and they can but don't have to align to the message sizes on the downstream side as long as the resulting data has the correct size (either of the original data or of data altered by the customer policy). In this illustration, the two downstream SSH_FXP_WRITE messages are combined into a single upstream SSH_FXP_WRITE message 1368. After forwarding to the upstream SSH proxy components **1369** and tracking the window size on that side of the proxy **1369,** the data is forwarded to the SSH server **1370.** This will result in multiple data packets to be sent and the SSH server will adjust its own window size **1371** which changes the tracking on the upstream SSH proxy side **1372.**

When all data was sent, the server sends data **1373,** that is tracked against the upstream proxy's window size **1374** and forwarded to the upstream SFTP proxy task **1375** which parses the data as the confirming SSH_FXP_STATUS message **1376.**

The downstream side waits for this server confirmation to understand whether the data could be written to the server or an error occurred (for example a "disk full" error). The result is forwarded thru the task chain to the downstream proxy side **1377,** tracked by the SSH proxy against the client's window size **1378** and eventually provided to the client **1379.**

Other application protocol tasks have a similar implementation to decouple the downstream side from the upstream side and providing full freedom to the policy engine unit to interrupt a data flow without causing deadlocks. The application protocol tasks are transforming the application-specific messages to higher-level abstracted messages that are protocol-agnostic for the policy engine tasks as illustrated in FIG. 11 and FIG. 12.

Existing SSH proxy solutions let it for the SSH client and the SSH server to manage the window size of the SSH channels; those SSH proxy solutions only forward the window-adjust packages of the client and of the server to the other side. As illustrated in FIG. 13, in order to support advanced filter engines flows and to prevent deadlocks, this invention manages the window size in a self-acting and autonomous manner both with the SSH client and with the SSG server but independently from each other. An example of such autonomous and independent window management is shown in FIG. 14.

The SSH Proxy of this invention **1400** is connected to the SSH client **1401** and to the SSH server **1402.** The SSH Proxy consists out of the Downstream SSH Proxy component **1403** and the Upstream SSH proxy component **1405** as well as the task chain with the policy engine unit and application-layer proxies **1404** as introduced in the previous figures. In FIG. 14 all details of that task chain are hidden and the focus is on the window management that the two proxy parts are doing independently and in self-acting manner.

In this example, during the opening sequence of the channel, the SSH client announced a starting window size of 1000KB and the SSH Proxy announced 200KB. The Downstream SSH Proxy component stores those values **1405.**

When data is sent to the SSH client, the tracked remote window size is updated by the number of bytes sent **1406.** When data is received from the SSH client, the own window size is updated **1407.** In this example, 20KB were sent and 80KB were received, so that the updated window sizes are 120KB and 980KB.

After sending another 40KB of data **1408** and receiving 50KB **1409,** the window sizes updates to 70KB and 940KB. This is when the Downstream SSH Proxy component decides autonomously and independent from the SSH Server and other components within the SSH Proxy that the own window size should be updated to avoid a deadlock if the client shall send more data before the task chain can forward it. The adjusted window size message of 330KB updates the tracked own window size to 400KB **1410.**

On the upstream side, the same logic is implemented but it is operated independently from the downstream side and independent from the other components in the SSH Proxy. In this example, the Upstream SSH Proxy component and the SSH server are announcing other values during the channel establishment **1411.** The starting window size are 300KB for the own window size of the Upstream SSH Proxy component and 500KB for the SSH server.

After receiving 15KB from the server **1412** and sending 120KB to the server **1413,** the Upstream SSH Proxy has updated its internal tracker to 285KB and 380KB. The SSH server updates the Window Size to bring it back to the original value by sending a Window Size Adjust message of 120KB **1414.**

After sending 140KB additional data **1415,** the SSH Proxy tracks an own window size of 145KB and decides autonomously and independent from the other components to send a Windows Adjust message of 455KB to update its own window size to 600KB **1416.**

In opposite to existing SSH proxy solutions, none of the Window Adjust messages from the SSH client or SSH server was forwarded thru the SSH proxy to the other side but was managed immediately by the connected SSH Proxy component on the downstream or upstream side.

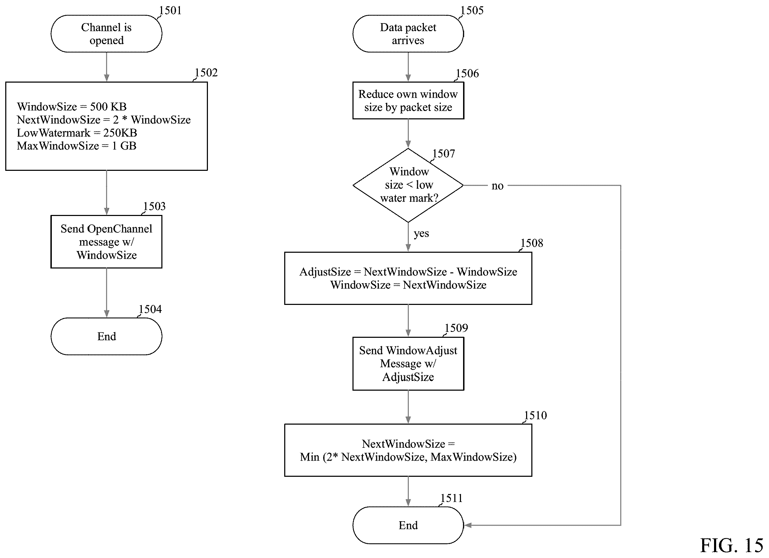

Different strategies can be used to decide when an the SSH proxy components on the downstream and on the upstream side will send their Window-Adjust messages autonomously to their SSH pier. FIG. 15 shows one embodiment as an example. When the channel is opened **1501,** same variables for each the downstream side and the upstream side of the SSH proxy component for this channel are set to initial values. The current window size, a low-watermark and a maximum window size are set to predefined constant values; the next window size is initialized by twice the starting window size **1502.** The SSH pier is informed of the starting window size in the message to request or to confirm the channel opening **1503.**

When a data packet arrives for a channel **1505,** its payload size is subtracted from the current window size **1506.** If the size becomes negative this is a protocol violation of the SSH pier and the connection will be closed with an error.

If the window size is smaller than the defined low-watermark **1507,** then the window size is updated to the previously calculated next window size **1508** and the difference is communicated to the SSH pier via a Window-Adjust message **1509.**

In order to optimize for large data transfers, the size for the next window update is increased by doubling the next window size but not more than a predefined maximum window size **1510.**

FIG. 16 illustrates one example of how the policy engine unit is triggered multiple times during an SSH session and how the Policy Contexts are maintained across those triggers as introduced with FIG. 2 and FIG. 3. The example is for the start of an SSH session for an SCP upload of a file "test.txt" leveraging the SFTP protocol.

The Policy Engine unit **1600** as shown as 214 in FIG. 2 and as 308 in FIG. 3. When triggered to execute a policy transaction it calls a customer policy **1601.** In one embodiment this customer policy is given as a Python script.

After the SCP client has connected to the SSH Proxy and the user authentication has validated the authentication method, the User Authentication unit **1602,** corresponding to 206 in FIG. 2, calls the Policy Engine unit with the "Auth" trigger **1603** to execute a policy transaction for the user authentication routine of the customer policy. For this policy transaction the Policy Unit's Connection Context **1604** is filled with the downstream connection properties collected so far by the Downstream Proxy unit. As shown, this includes the username and the public key hash. Additional properties, like the listener port, the client's source IP address and source port will also be part of the Connection Context but not shown in this example. This policy transaction has no additional Transaction Context; all available information is in the Connection Context.

In this example, the Customer Policy performs two actions: First it performs an external lookup of the user's group memberships **1605,** for example, by connecting to a directory service and then writes the membership property back into the Connection Context for future use **1606.** Secondly, it determines the server address for the upstream connection from the username used in the downstream connection, sets the username to be used for the upstream connection and provides the name of an available private key file to be used for the upstream authentication **1607.** The SSH Proxy uses the policy result to establish the upstream connection.

When the SCP client opens a channel for the SFTP file upload, the Channel Manager unit **1608,** corresponding to 207 in FIG. 2, calls the Policy Engine unit with the "OpenChannel" trigger **1609** to start a new policy transaction for the open-channel routine of the customer policy. The Connection Context **1610** holds the previous Downstream Proxy properties from the "Auth" trigger including the additional properties set during the previous policy execution, so that the open-channel routine has access to the information of the previous policy trigger. In addition, the Connection Context also holds the information about the upstream connection now. For this policy transaction, the Transaction Context is filled with the specific information of the channel that was requested to be opened **1611.** In this example, the customer policy allows the channel and requests that the channel shall be proxied by installing the SFTP application-layer proxy tasks into the task chain **1612.**

Beside the application-layer proxy tasks, the task chain will also include a Policy Channel task **1613,** corresponding to 305 in FIG. 3. After interpreting the SFTP messages that describe the beginning of the file and translating that to the higher-level and protocol-agnostic "Start-of-File" message, the Policy Channel task triggers a third policy transaction with the "StartOfFile" trigger **1614.** The Connection Context **1615** still retains the information from the previous policy transactions including the channel information now. The Transaction Context **1616** has the specific information of the current transactions such as the file name. In this example, the custom policy returns with an "allow-filter" verdict **1617** and informs the Policy Engine that it wants to see the content of the file also and that it expects the next call to the filter engine when 10 bytes of the content will be available.

FIG. 16 stops at this point although additional policy transactions with the content of the file will follow. The Context objects continue to be updated and provide all the information including information of the previous policy transactions of this SSH session. Completely omitted from FIG. 16 is the Meta Connection Context of the Policy Engine that is shown as 215 in FIG. 2. That context unit retains information of all the connections of a user over time so that a policy can make decisions also across a multiple of connections.

One embodiment of this invention implements all the components described herein within a single user space application that can be compiled and linked into a single binary running as a single process on a computer's operating system. The implementation of interruptible tasks allows for thousands of parallel connections and transactions to be proxied and filtered without running out of system resources such as processes, threads, pipes or file descriptors. This lowers latency due to less process execution overhead.

Having access to a single process memory RAM also enables the task of building the Meta Connection Context that keeps track of statistics of SSH connections for the same user or group of users or for the same destination server so that this additional transaction object can be leveraged within customer policies in the Policy engine unit. It further provides a higher security level because the decrypted traffic between the downstream and upstream proxy sides does not need to be sent across process boundaries and can stay within the single process RAM.

## Claims

1. A method comprising the steps of:
processing incoming SSH connections in a Downstream Proxy unit;
involving a Policy Engine unit to control user access and access to the SSH server;
opening an outgoing SSH connection from an Upstream Proxy unit to the SSH server;
transferring SSH channel data between the SSH client, Downstream Proxy unit, Policy Engine unit, Upstream Proxy unit and SSH server in both directions;
allowing the Policy Engine unit to filter the transferred data with definable policy control whether chunks of data can already be forwarded while more data is still being received or whether more data needs to be received before deciding on data forwarding, and
controlling window sizes of the SSH protocol between the SSH client and the Downstream Proxy unit and/or between the Upstream Proxy unit and the SSH server independently from each other and autonomously sending window size adjust messages, allowing to receive and to provide more data to the Policy Engine unit without stalling the connection, hereby enabling the Policy Engine unit to make decisions to forward, hold or block any amount of data based on the definable policy control, wherein the window size defines the amount of SSH channel data exchanged before receiving and/or sending a window size adjustment message.

2. The method of claim 1 where the transferred SSH data is interpreted on an application protocol level, preferably SCP, SFTP or Git, and where the Downstream Proxy unit exchanges application protocol level control messages with the SSH client and/or the Upstream Proxy unit exchanges application protocol level control messages with the SSH server, both autonomously and independently from messages from the other side, preferably a direct SSH_FXP_STATUS message in response to a SSH_FXP_WRITE message from the SSH client, in order to avoid the problem of stalling connections on an application protocol level while waiting for a policy decision before data can be forwarded.

3. The method of claim 1 or 2, wherein the Policy Engine unit is responsible for one or more different decisions during an SSH connection:
- for decisions whether a user of the SSH client application is allowed to connect to the SSH server,
- for decisions on whether to allow a channel request of a specific type and/or command preferably an SCP upload and/or download, an SFTP session, a shell session and/or a Git repository clone
- for decisions on allowing, blocking or modifying data exchanged on such a channel, preferably an SFTP upload and/or download, by analyzing the channel data as a stream of data chunks including the option to hold data as long as needed before a decision is made.

4. The method of any of the claims 1 to 3, wherein the Policy Engine unit maintains Connection Context, Transaction Context and/or Meta Connection Context information across the SSH connection and/or for multiple parallel and/or historic SSH connections, allowing the definable policy to continuously interact with that information for policy decisions, hereby allowing to refer to context and intermediate results determined at previous policy transactions.

5. The method of any of the claims 1 to 4 of where the Downstream Proxy unit and/or the Upstream Proxy unit are implemented as application-level proxy tasks and/or the Policy Engine unit is implemented as a Policy Engine task, all with independent task scheduling and incoming message queues and preferably wherein the tasks are linked to each other with a dual-linked chain of tasks, enabling an asynchronous execution of the tasks,
and preferably
one Application-level Proxy task embodiment is parsing and generating messages of the SFTP protocol;
one Application-level Proxy task embodiment is parsing and generating messages of the SCP protocol;
one Application-level Proxy task embodiment is parsing and generating messages of the Git protocol, and/or
additional Application-level Proxy tasks to be added for other SSH application-level protocols.

6. The method of any of the claims 4 to 5 of where
the Application-level Proxy task on the Downstream Proxy unit side of the task chain is forming a virtual shell emulating the server responses to keyboard input of the user, and
the Application-level Proxy task at the Upstream Proxy unit side is forming a virtual terminal client emulating the keyboard input of the user,
together allowing to map commands and responses of an SSH shell session into higher-level abstracted messages for the Policy Engine unit.

7. The method of any of the claims 1 to 6, wherein the Application-level messages of the SSH application protocol are abstracted into higher-level messages that are protocol-agnostic to unify similar functionality of different application-level protocols for the Policy Engine unit, allowing policy to execute a single policy routine for multiple SSH applications, preferably s a single routine for file transfers via SCP, SFTP or Git.

8. The method of any of the claims 1 to 7 wherein an additional Policy Multiplexer task in the task chain triggers multiple Policy Engine unit transactions in parallel in order to support multiplexing application-level protocols such as the parallel transfer of multiple files via SFTP and thereby decoupling the pausing and/or resuming of the parallel data transfers.

9. The methods of any of the claims 4 to 8 wherein the Policy Engine unit modifies data in the Transaction Context resulting in altered data content in the SSH application-level protocol to support modification of the commands, responses and files exchanged between SSH client and SSH server thru the SSH Proxy.

10. The methods of claim 1 and claim 3 wherein the Policy Engine unit generates block events, resulting in block messages flowing in the opposite direction thru the dual-linked task chain and error messages generated in the application-level protocol in order to provide end users with proper error messages and to support blocking of only some files while allowing other files in the data transfer of a set of files, preferably such as the download and/or upload of a directory.

11. The method of any of the claims 1 to 10 wherein the hostname for the SSH server is determined by the Policy Engine unit from information made available thru the Connection Context by
mapping that information to a list of hostnames, or by
programmatically calculating the hostname from information encoded into the username.

12. The method of any of the claims 1 to 11 wherein the hostname for the SSH server is retrieved after the SSH client connects to the Downstream Proxy unit as being a jump host and exposing the SSH server name to the jump host;
the Downstream Proxy unit retaining the SSH server host name in the Connection Context of the Policy Engine unit;
the Downstream Proxy connecting to a second Virtual Downstream Proxy unit;
the Virtual Downstream Proxy unit connecting to the same Policy Engine unit and to the Upstream Proxy unit, and
the Upstream Proxy unit connecting to the SSH server available in the Connection Context.

13. The method of any of the claims 1 to 12 wherein the Upstream Proxy unit authenticates the user for the upstream connection with public key encryption by
using public/private key pairs provided by the Policy Engine unit from local storage or retrieved remotely, or by
opening an SSH Agent channel to the SSH client, requesting a list of available public keys from the client, selecting the keys to be used in upstream authentication by the Policy Engine unit and asking the SSH client through the SSH Agent channel to sign the response for the user authentication challenge.

14. The method of any of the claims 1 to 13 wherein the Policy engine unit executes the definable policy by one or more of the following:
running a Python interpreter to execute a customer policy written in Python;
interconnecting to a 3^{rd}-party policy engine;
implementing an ICAP client and translating triggered policy transactions to pseudo HTTP-transactions to interact with generic ICAP servers;
implementing an OCP client in combination with an OCP scheme for SSH and translating triggered policy transactions to match that OCP scheme, or
implementing a HTTP(S)-REST client and translating triggered policy transactions to REST calls to interact with generic REST APIs.

15. A device comprising a central processing unit, network interfaces and a memory, wherein in the memory a program is stored and executed to implement a method according the method claims 1 to 14.

## Patentansprüche

1. Ein Verfahren, das die folgenden Schritte umfasst:
Verarbeiten eingehender SSH-Verbindungen in einer Downstream-Proxy-Einheit;
Einbeziehen einer Richtlinien-Verarbeitungs-Einheit zur Steuerung des Benutzerzugriffs und des Zugriffs auf den SSH-Server;
das Öffnen einer ausgehenden SSH-Verbindung von einer Upstream-Proxy-Einheit zum SSH-Server;
Übertragen von SSH-Kanaldaten zwischen dem SSH-Client, der Downstream-Proxy-Einheit, der Richtlinien-Verarbeitungs-Einheit, der Upstream-Proxy-Einheit und dem SSH-Server in beide Richtungen;
der Richtlinien-Verarbeitungs-Einheit die Möglichkeit geben, die übertragenen Daten anhand definierbarer Richtliniensteuerung zu filtern, um zu steuern, ob Datenblöcke bereits weitergeleitet werden können, während noch weitere Daten empfangen werden, oder ob zunächst weitere Daten empfangen werden müssen, bevor über die Datenweiterleitung entschieden wird, und
Steuern der Fenstergrößen des SSH-Protokolls zwischen dem SSH-Client und der Downstream-Proxy-Einheit und/oder zwischen der Upstream-Proxy-Einheit und dem SSH-Server unabhängig voneinander sowie das autonome Senden von Nachrichten zur Anpassung der Fenstergröße, wodurch der Empfang und die Bereitstellung weiterer Daten an die Richtlinien-Verarbeitungs-Einheit ermöglicht werden, ohne die Verbindung zu unterbrechen, wodurch die Richtlinien-Verarbeitungs-Einheit in die Lage versetzt wird, Entscheidungen über das Weiterleiten, zum Zurückhalten oder zum Blockieren beliebiger Datenmengen auf der Grundlage der definierbaren Richtliniensteuerung, wobei die Fenstergröße die Menge der SSH-Kanal-Daten definiert, die vor dem Empfangen und/oder dem Senden einer Fenstergrößenanpassungsnachricht ausgetauscht wird.

2. Das Verfahren nach Anspruch 1, wobei die übertragenen SSH-Daten auf Anwendungsprotokollebene interpretiert werden, vorzugsweise SCP, SFTP oder Git, und wobei die Downstream-Proxy-Einheit Steuermeldungen auf Anwendungsprotokollebene mit dem SSH-Client austauscht und/oder die Upstream-Proxy-Einheit Steuermeldungen auf Anwendungsprotokollebene mit dem SSH-Server austauscht, beides autonom und unabhängig von Meldungen der Gegenseite, vorzugsweise eine direkte SSH_FXP_STATUS-Nachricht als Antwort auf eine SSH_FXP_WRITE-Nachricht vom SSH-Client, um das Problem des Blockierens von Verbindungen auf Anwendungsprotokollebene zu vermeiden, während auf eine Richtlinienentscheidung gewartet wird, bevor Daten weitergeleitet werden können.

3. Das Verfahren nach Anspruch 1 oder 2, wobei die Richtlinien-Verarbeitungs-Einheit während einer SSH-Verbindung für eine oder mehrere unterschiedliche Entscheidungen zuständig ist:
- für Entscheidungen darüber, ob ein Benutzer des SSH-Clients eine Verbindung zum SSH-Server herstellen darf,
- für Entscheidungen darüber, ob eine Kanal-Anfrage eines bestimmten Typs und/oder Befehls zugelassen wird, vorzugsweise ein SCP-Upload und/oder -Download, eine SFTP-Sitzung, eine Shell-Sitzung und/oder ein Git-Repository-Klon
- für Entscheidungen darüber, ob die über einen solchen Kanal ausgetauschten Daten - vorzugsweise ein SFTP-Upload und/oder -Download - zugelassen, blockiert oder modifiziert werden sollen, indem die Kanaldaten als Strom von Datenblöcken analysiert werden, einschließlich der Möglichkeit, Daten so lange wie nötig zurückzuhalten, bis eine Entscheidung getroffen wird.

4. Das Verfahren nach einem der Ansprüche 1 bis 3, wobei die Richtlinien-Verarbeitungs-Einheit Informationen zum Verbindungskontext, Transaktionskontext und/oder Meta-Verbindungskontext über die SSH-Verbindung hinweg und/oder für mehrere parallele und/oder historische SSH-Verbindungen verwaltet, wodurch die definierbare Richtlinie kontinuierlich mit diesen Informationen für Richtlinienentscheidungen interagieren kann, was es ermöglicht, auf den Kontext und Zwischenergebnisse Bezug zu nehmen, die bei früheren Richtlinien-Transaktionen ermittelt wurden.

5. Das Verfahren nach einem der Ansprüche 1 bis 4, wobei die Downstream-Proxy-Einheit und/oder die Upstream-Proxy-Einheit als Proxy-Aufgaben auf Anwendungsebene und/oder die Richtlinien-Verarbeitungs-Einheit als Richtlinien-Verarbeitungs-Aufgabe implementiert sind, alle mit unabhängiger Aufgabenplanung und eingehenden Nachrichtenwarteschlangen, und vorzugsweise wobei die Aufgaben über eine doppelt verkettete Aufgaben-Kette miteinander verbunden sind, was eine asynchrone Ausführung der Aufgaben ermöglicht,
und vorzugsweise
eine Ausführungsform der Proxy-Aufgabe auf Anwendungsebene das Parsen und Generieren von Nachrichten des SFTP-Protokolls umfasst;
eine Ausführungsform einer Proxy-Aufgabe auf Anwendungsebene das Parsen und Generieren von Nachrichten des SCP-Protokolls umfasst;
Eine Ausführungsform einer Proxy-Aufgabe auf Anwendungsebene ist das Parsen und Generieren von Nachrichten des Git-Protokolls und/oder
weitere Aufgaben des Anwendungs-Proxys, die für andere SSH-Anwendungsprotokolle hinzugefügt werden sollen.

6. Das Verfahren nach einem der Ansprüche 4 bis 5, wobei
die Aufgabe "Anwendungs-Proxy" auf der Seite der Downstream-Proxy-Einheit in der Aufgaben-Kette eine virtuelle Hülle bildet, die die Serverantworten auf Tastatureingaben des Benutzers emuliert, und
die Anwendungs-Proxy-Aufgabe auf der Seite der Upstream-Proxy-Einheit einen virtuellen Terminal-Client bildet, der die Tastatureingaben des Benutzers emuliert,
wodurch es gemeinsam möglich wird, Befehle und Antworten einer SSH-Shell-Sitzung in abstrahierte Nachrichten höherer Ebene für die Richtlinien-Verarbeitungs-Einheit abzubilden.

7. Das Verfahren nach einem der Ansprüche 1 bis 6, wobei die Nachrichten auf Anwendungsebene des SSH-Anwendungsprotokolls in übergeordnete, protokollunabhängige Nachrichten abstrahiert werden, um ähnliche Funktionalitäten verschiedener Anwendungsprotokolle auf Anwendungsebene für die Richtlinien-Verarbeitungs-Einheit zu vereinheitlichen, wodurch die Richtlinien eine einzige Richtlinien-Routine für mehrere SSH-Anwendungen ausführen kann, vorzugsweise eine einzige Routine für Dateiübertragungen über SCP, SFTP oder Git.

8. Das Verfahren nach einem der Ansprüche 1 bis 7, wobei eine zusätzliche Richtlinien-Multiplexer-Aufgabe in der Aufgaben-Kette mehrere Transaktionen der Richtlinien-Verarbeitungs-Einheit parallel auslöst, um das Multiplexen von Anwendungsprotokollen zu unterstützen, wie beispielsweise die parallele Übertragung mehrerer Dateien über SFTP, und dadurch das Anhalten und/oder Fortsetzen der parallelen Datenübertragungen voneinander zu entkoppeln.

9. Das Verfahren nach einem der Ansprüche 4 bis 8, wobei die Richtlinien-Verarbeitungs-Einheit Daten im Transaktionskontext modifiziert, was zu einem geänderten Dateninhalt im SSH-Anwendungsprotokoll führt, um die Modifikation der Befehle, Antworten und Dateien zu unterstützen, die zwischen SSH-Client und SSH-Server über den SSH-Proxy ausgetauscht werden.

10. Das Verfahren nach Anspruch 1 und Anspruch 3, wobei die Richtlinien-Verarbeitungs-Einheit Blockereignisse erzeugt, was dazu führt, dass Blockmeldungen in entgegengesetzter Richtung durch die doppelt verknüpfte Aufgaben-Kette fließen und Fehlermeldungen im Anwendungsprotokoll erzeugt werden, um Endbenutzern korrekte Fehlermeldungen bereitzustellen und die Blockierung nur bestimmter Dateien zu unterstützen, während andere Dateien bei der Datenübertragung einer Dateigruppe, vorzugsweise wie dem Herunterladen und/oder Hochladen eines Verzeichnisses, zugelassen werden.

11. Das Verfahren nach einem der Ansprüche 1 bis 10, wobei der Hostname für den SSH-Server von der Richtlinien-Verarbeitungs-Einheit anhand von Informationen ermittelt wird, die über den Verbindungskontext bereitgestellt werden durch
diese Informationen einer Liste von Hostnamen zuzuordnen, oder durch
programmgesteuerte Berechnung des Hostnamens aus Informationen, die im Benutzernamen kodiert sind.

12. Das Verfahren nach einem der Ansprüche 1 bis 11, wobei der Hostname des SSH-Servers abgerufen wird, nachdem der SSH-Client eine Verbindung zur Downstream-Proxy-Einheit als Sprunghost hergestellt hat, und der Name des SSH-Servers dem Sprunghost offengelegt wird;
wobei die Downstream-Proxy-Einheit den Hostnamen des SSH-Servers im Verbindungskontext der Richtlinien-Verarbeitungs-Einheit speichert;
wobei sich der Downstream-Proxy mit einer zweiten virtuellen Downstream-Proxy-Einheit verbindet;
die Virtual Downstream-Proxy-Einheit stellt eine Verbindung zu derselben Richtlinien-Verarbeitungs-Einheit und zur Upstream-Proxy-Einheit her, und
die Upstream-Proxy-Einheit, die eine Verbindung zu dem im Verbindungskontext verfügbaren SSH-Server herstellt.

13. Das Verfahren nach einem der Ansprüche 1 bis 12, wobei die Upstream-Proxy-Einheit den Benutzer für die Upstream-Verbindung mittels Public-Key-Verschlüsselung authentifiziert, indem
Verwendung von öffentlichen/privaten Schlüsselpaaren, die von der Richtlinien-Verarbeitungs-Einheit aus dem lokalen Speicher bereitgestellt oder aus der Ferne abgerufen werden, oder durch
einen SSH-Agent-Kanal zum SSH-Client zu öffnen, vom Client eine Liste der verfügbaren öffentlichen Schlüssel anzufordern, die Schlüssel auszuwählen, die von der Richtlinien-Verarbeitungs-Einheit für die Upstream-Authentifizierung verwendet werden sollen, und den SSH-Client über den SSH-Agent-Kanal aufzufordern, die Antwort für die Benutzerauthentifizierungsanfrage zu signieren.

14. Das Verfahren nach einem der Ansprüche 1 bis 13, wobei die Richtlinien-Verarbeitungs-Einheit die definierbare Richtlinie durch eine oder mehrere der folgenden Maßnahmen ausführt:
Ausführen eines Python-Interpreters, um eine in Python geschriebene Kundenrichtlinie auszuführen;
die Anbindung an eine Richtlinien-Verarbeitung eines Drittanbieters;
Implementierung eines ICAP-Clients und Umwandlung ausgelöster Richtlinien-Transaktionen in Pseudo-HTTP-Transaktionen zur Interaktion mit generischen ICAP-Servern;
Implementierung eines OCP-Clients in Kombination mit einem OCP-Schema für SSH und Umwandlung ausgelöster Richtlinien-Transaktionen entsprechend diesem OCP-Schema oder
Implementierung eines HTTP(S)-REST-Clients und Übersetzung ausgelöster Richtlinien-Transaktionen in REST-API-Aufrufe zur Interaktion mit generischen REST-APIs.

15. Eine Vorrichtung, die eine Zentraleinheit, Netzwerkschnittstellen und einen Speicher umfasst, wobei im Speicher ein Programm gespeichert ist und ausgeführt wird, um ein Verfahren gemäß den Verfahrensansprüchen 1 bis 14 zu implementieren.

## Revendications

1. Un procédé comprenant les étapes suivantes :
le traitement des connexions SSH entrantes dans une Unité de proxy aval ;
l'intégration d'une Unité de traitement de politique pour contrôler l'accès des utilisateurs et l'accès au Serveur SSH ;
l'ouverture d'une Connexion SSH sortante depuis une Unité de proxy amont vers le Serveur SSH ;
le transfert bidirectionnel des données de canal SSH entre le Client SSH, l'Unité de proxy aval, l'Unité de traitement de politique, l'Unité de proxy amont et le Serveur SSH ;
permettre à l'Unité de traitement de politique de filtrer les données transmises à l'aide d'un Contrôle de politique définissable, afin de déterminer si des blocs de données peuvent déjà être transférés alors que d'autres données sont encore en cours de réception, ou s'il faut d'abord recevoir d'autres données avant de décider du transfert des données, et
contrôler les tailles de fenêtre du protocole SSH entre le Client SSH et l'Unité de proxy aval et/ou entre l'Unité de proxy amont et le Serveur SSH de manière indépendante l'une de l'autre, ainsi que l'envoi autonome de messages pour ajuster la taille de la fenêtre, ce qui permet la réception et la mise à disposition de données supplémentaires à l'Unité de traitement de politique, sans interrompre la connexion, ce qui permet à l'Unité de traitement de politique de de prendre des décisions concernant le transfert, la rétention ou le blocage de n'importe quelle quantité de données sur la base d'un Contrôle de politique définissable, la Taille de fenêtre définissant la quantité de données du canal SSH échangée avant la réception et/ou l'envoi d'un message d'ajustement de la taille de fenêtre.

2. Le procédé selon la revendication 1, dans lequel les données SSH transmises sont interprétées au niveau de protocole d'application, de préférence SCP, SFTP ou Git, et dans lequel l'Unité de proxy aval échange des messages de contrôle au niveau de protocole d'application avec le Client SSH et/ou l'Unité de proxy amont échange des messages de contrôle au niveau de protocole d'application avec le Serveur SSH, les deux de manière autonome et indépendamment des messages de la partie adverse, de préférence un message SSH_FXP_STATUS direct en réponse à un message SSH_FXP_WRITE provenant du Client SSH, afin d'éviter le problème de blocage des connexions au Niveau de protocole d'application pendant l'attente d'une décision relative à la politique avant que les données puissent être transférées.

3. Le procédé selon la revendication 1 ou 2, dans lequel l'Unité de traitement de politique est chargée, au cours d'une Connexion SSH, de prendre une ou plusieurs décisions différentes :
- pour déterminer si un utilisateur du Client SSH est autorisé à se connecter au Serveur SSH,
- pour décider si une requête de canal d'un type et/ou d'une commande donnés est autorisée, de préférence un téléchargement et/ou un chargement SCP, une session SFTP, une session shell et/ou le clonage d'un dépôt Git
- pour déterminer si les données échangées via un tel canal - de préférence un téléchargement ou un chargement SFTP - doivent être autorisées, bloquées ou modifiées, en analysant les données du canal sous forme de flux de blocs de données, y compris la possibilité de retenir les données aussi longtemps que nécessaire jusqu'à ce qu'une décision soit prise.

4. Le procédé selon l'une des revendications 1 à 3, dans lequel l'Unité de traitement de politique gère les informations relatives au Contexte de connexion, au contexte de transaction et/ou au Contexte de méta-connexion, au-delà de la Connexion SSH et/ou pour plusieurs connexions SSH parallèles et/ou historiques, ce qui permet à la politique définissable d'interagir en continu avec ces informations pour les décisions relatives aux politiques, permettant ainsi de se référer au contexte et aux résultats intermédiaires déterminés lors de transactions de politique antérieures.

5. Le procédé selon l'une des revendications 1 à 4, dans lequel l'Unité de proxy aval et/ou l'Unité de proxy amont sont mises en œuvre en tant que tâches de proxy au niveau de l'application et/ou l'Unité de traitement de politique est mise en œuvre en tant que tâche de traitement de politique, chacune disposant d'une planification de tâches indépendante et de files d'attente de messages entrants, et de préférence dans lequel les tâches sont reliées entre elles par une Chaîne de tâches à double chaînage, ce qui permet une exécution asynchrone des tâches,
et de préférence
une variante de la Tâche de proxy au niveau de l'application comprend l'analyse et la génération de messages du Protocole SFTP ;
un mode de réalisation d'une Tâche de proxy au niveau de l'application comprend l'analyse et la génération de messages du Protocole SCP ;
Un mode de réalisation d'une tâche de proxy au niveau applicatif consiste à analyser et à générer des messages du Protocole Git et/ou
d'autres tâches du proxy d'application qui doivent être ajoutées pour d'autres protocoles d'application SSH.

6. Le procédé selon l'une des revendications 4 à 5, dans lequel
la tâche « proxy d'application », située du côté de l'Unité de proxy aval dans la Chaîne de tâches, forme une enveloppe virtuelle qui émule les réponses du serveur aux saisies au clavier de l'utilisateur, et
la tâche de proxy d'application, du côté de l'Unité de proxy amont, forme un client terminal virtuel qui émule les saisies au clavier de l'utilisateur,
ce qui permet, conjointement, de mapper les commandes et les réponses d'une session de shell SSH en messages abstraits de niveau supérieur destinés à l'Unité de traitement de politique.

7. Le procédé selon l'une des revendications 1 à 6, dans lequel les messages au niveau application du protocole d'application SSH sont abstraits en messages de niveau supérieur, indépendants du protocole, afin d'uniformiser les fonctionnalités similaires de différents protocoles d'application au niveau application pour l'Unité de traitement de politique, ce qui permet à celle-ci d'exécuter une seule routine de règles pour plusieurs applications SSH, de préférence une seule routine pour les transferts de fichiers via SCP, SFTP ou Git.

8. Le procédé selon l'une des revendications 1 à 7, dans lequel une tâche de multiplexeur de politique dans la Chaîne de tâches déclenche plusieurs transactions de l'Unité de traitement de politique en parallèle afin de prendre en charge le multiplexage des protocoles d'application, comme par exemple le transfert parallèle de plusieurs fichiers via SFTP, et de dissocier ainsi la suspension et/ou la reprise des transferts de données parallèles les uns des autres.

9. Le procédé selon l'une des revendications 4 à 8, dans lequel l'Unité de traitement de politique modifie des données dans le Contexte de transaction, ce qui entraîne une modification du contenu des données dans le protocole d'application SSH, afin de prendre en charge la modification des commandes, des réponses et des fichiers échangés entre le Client SSH et le Serveur SSH via le proxy SSH.

10. Le procédé selon les revendications 1 et 3, dans lequel l'Unité de traitement de politique génère des événements de blocage, ce qui entraîne le passage de messages de blocage dans le sens inverse à travers la Chaîne de tâches à double liaison et la génération de messages d'erreur dans le protocole d'application, afin de fournir aux utilisateurs finaux des messages d'erreur corrects et de permettre le blocage de certains fichiers uniquement, tandis que d'autres fichiers sont autorisés lors du transfert de données d'un groupe de fichiers, de préférence tel que le téléchargement et/ou l'envoi d'un répertoire.

11. Le procédé selon l'une des revendications 1 à 10, dans lequel le nom d'hôte du Serveur SSH est déterminé par l'Unité de traitement de politique à partir d'informations fournies via le Contexte de connexion par
en associant ces informations à une liste de noms d'hôtes, ou en
un calcul automatisé du nom d'hôte à partir d'informations codées dans le nom d'utilisateur.

12. Le procédé selon l'une des revendications 1 à 11, dans lequel le nom d'hôte du Serveur SSH est récupéré après que le Client SSH a établi une connexion avec l'Unité de proxy aval en tant qu'hôte de relais, et le nom du Serveur SSH est communiqué à l'hôte de relais ;
l'Unité de proxy aval enregistrant le nom d'hôte du Serveur SSH dans le Contexte de connexion de l'Unité de traitement de politique ;
dans lequel le proxy en aval se connecte à une deuxième unité de proxy aval virtuelle ;
l' unité de proxy aval virtuelle établit une connexion avec la même Unité de traitement de politique et avec l'Unité de proxy amont, et
l'Unité de proxy amont établit une connexion avec le Serveur SSH disponible dans le Contexte de connexion.

13. Le procédé selon l'une des revendications 1 à 12, dans lequel l'Unité de proxy amont authentifie l'utilisateur pour la connexion en amont au moyen d'un chiffrement à clé publique, en
l'utilisation de paires de clés publiques/privées fournies par l'Unité de traitement de politique à partir de la Mémoire locale ou récupérées à distance, ou par
en ouvrant un canal d'agent SSH vers le Client SSH, en demandant au Client SSH une liste des clés publiques disponibles, en sélectionnant les clés qui doivent être utilisées par l'Unité de traitement de politique pour l'authentification en amont , et en demandant au Client SSH, via le canal d'agent SSH, de signer la réponse à la requête d'authentification de l'utilisateur.

14. Le procédé selon l'une des revendications 1 à 13, dans lequel l'Unité de traitement de politique exécute la règle définissable par une ou plusieurs des mesures suivantes :
exécuter un interpréteur Python afin d'exécuter une politique client écrite en Python ;
la connexion à un service de traitement de règles tiers ;
la mise en œuvre d'un Client ICAP et la conversion des transactions de règles déclenchées en transactions pseudo-HTTP pour interagir avec des serveurs ICAP génériques ;
la mise en œuvre d'un Client OCP en combinaison avec un schéma OCP pour SSH et la conversion des transactions de règles déclenchées conformément à ce schéma OCP ou
mise en œuvre d'un Client REST HTTP(S) et traduction des transactions de politique déclenchées en appels d'API REST pour interagir avec des API REST génériques.

15. Un dispositif comprenant une Unité centrale, des Interfaces réseau et une Mémoire, dans lequel un programme est stocké dans la Mémoire et exécuté pour mettre en œuvre un procédé selon les revendications de procédé 1 à 14.
